(19) Europäisches Patentamt
European Patent Office
Office européen des brevets

(11) **EP 4 539 321 B1**

(12) **EUROPEAN PATENT SPECIFICATION**

(45) Date of publication and mention
of the grant of the patent:
**10.06.2026  Bulletin 2026/24**

(21) Application number: **23819586.1**

(22) Date of filing: **15.05.2023**

(51) International Patent Classification (IPC):
*H02M 1/00* (2006.01)      *H02M 3/07* (2006.01)
*H02M 3/158* (2006.01)     *H02M 1/32* (2007.01)
*H02M 3/00* (2006.01)

(52) Cooperative Patent Classification (CPC):
**H02M 1/327; H02M 1/0058; H02M 1/0095;
H02M 3/01; H02M 3/07; H02M 3/158; H02M 3/1584**

(86) International application number:
**PCT/JP2023/018049**

(87) International publication number:
**WO 2023/238602 (14.12.2023 Gazette 2023/50)**

(54) **POWER CONVERSION DEVICE**

LEISTUNGSWANDLER

DISPOSITIF DE CONVERSION DE PUISSANCE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **10.06.2022   JP 2022094503**

(43) Date of publication of application:
**16.04.2025  Bulletin 2025/16**

(73) Proprietor: **DENSO CORPORATION
Kariya-city, Aichi 448-8661 (JP)**

(72) Inventors:
• **SUZUKI, Kazuma
Nisshin-city, Aichi 470-0111 (JP)**
• **KUBO, Shunichi
Kariya- city, Aichi 448-8661 (JP)**

(74) Representative: **TBK
Bavariaring 4-6
80336 München (DE)**

(56) References cited:
**EP-B1- 3 537 585          JP-A- 2009 219 250
JP-A- 2019 004 544     US-B1- 10 651 731
US-B1- 10 651 731**

• **ZHU CHONG ET AL: "Comprehensive Design and
Optimization of an Onboard Resonant Self-
Heater for EV Battery", IEEE TRANSACTIONS ON
TRANSPORTATION ELECTRIFICATION, IEEE,
vol. 7, no. 2, 21 September 2020 (2020-09-21),
pages 452 - 463, XP011854025, DOI: 10.1109/
TTE.2020.3025014**
• **SHANG YUNLONG ET AL: "A Sine-Wave Heating
Circuit for Automotive Battery Self-Heating at
Subzero Temperatures", IEEE TRANSACTIONS
ON INDUSTRIAL INFORMATICS, IEEE SERVICE
CENTER, NEW YORK, NY, US, vol. 16, no. 5, 17
June 2019 (2019-06-17), pages 3355 - 3365,
XP011773596, ISSN: 1551-3203, [retrieved on
20200213], DOI: 10.1109/TII.2019.2923446**

**Description**

[TECHNICAL FIELD]

The present disclosure relates to power conversion devices including low voltage terminals and high voltage terminals.

[BACKGROUND ART]

As a power conversion device of this type, Patent Document 1 describes one increasing the DC voltage of a battery and supplies the voltage to a capacitor.

[PRIOR ART REFERENCES]

[PATENT DOCUMENT]

[Patent Document 1] JP2018042341A

Document EP 3537585 B1 discloses a switched-capacitor converter (SCC). The SCC includes multiple switch stages cascaded together. Each switch stage includes two half bridges connected in parallel. Each half bridge has a high and low-side switch connected at a switching node. The switching nodes of each half bridge of each switch stage are coupled to corresponding switching nodes of some other switch stage via capacitors. The switches are controlled such that during a first interval, a phase A capacitor attached to each switch stage is charged while a phase B capacitor is discharged. During a second interval, the phase B capacitor is charged while the phase A capacitor is discharged. By alternating the intervals thusly, one of the capacitors coupled to each switch stage is nearly always discharging such that it can provide current to an output of the SCC or some adjacent switch stage.

Document US 10 651 731 B1 discloses a power supply system comprising multiple switched-capacitor converters and a controller. The multiple switched-capacitor converters include at least a first switched-capacitor converter interleaved with a second switched-capacitor converter. During operation, the controller produces control signals. The control signals control the interleaved first switched-capacitor converter and the second switched-capacitor converter to produce an output voltage to power a load.

Document ZHU CHONG ET AL: "Comprehensive Design and Optimization of an Onboard Resonant Self-Heater for EV Battery", IEEE TRANSACTIONS ON TRANSPORTATION ELECTRIFICATION, IEEE, vol. 7, no. 2, 21 September 2020 (2020-0921), pages 452-463, discloses an onboard battery preheater for internally preheating batteries of an electric vehicle (EV) without external power supplies.

Document SHANG YUNLONG ET AL: "A Sine-Wave Heating Circuit for Automotive Battery Self-Heating at Subzero Temperatures", IEEE TRANSACTIONS ON INDUSTRIAL INFORMATICS, IEEE SERVICE CENTER, NEW YORK, NY, US, vol. 16, no. 5, 17 June 2019 (2019-06-17), pages 3355-3365, discloses a high-frequency sine-wave (SW) heater based on resonant LC converters to self-heat automotive batteries at low-temperatures without the need of external heaters.

[SUMMARY OF INVENTION]

For example, as a temperature increasing operation to raise the temperature of a battery, electric power may be transferred between the battery and the capacitor. In this case, a part of the transferred power is converted into heat energy, and the converted heat energy raises the temperature of the battery. However, since there is an upper limit of the voltage that can be applied to the battery and capacitor, the amount of power transferred and received may be limited in the temperature increasing operation. As a result, the heat energy used to raise the temperature of the battery cannot be sufficiently increased, and there is concern that the efficiency of the temperature increasing operation may decrease.

The present disclosure is made in view of the above-mentioned problems, and its main purpose is to provide a power conversion device capable of improving the efficiency of temperature increasing operation.

This object is solved by a power conversion device as set out in claim 1. Advantageous developments are defined in the dependent claims.

In contrast to the present disclosure, a temperature increasing operation may alternate between a voltage increasing operation in which the voltage input from the low voltage terminals is boosted and output to the high voltage terminals, and a voltage decreasing operation in which the voltage input from the high voltage terminals is stepped down and output to the low voltage terminals. In this way, power is transferred between the low voltage terminals and the high voltage terminals. In this case, a part of the transferred power is converted into heat energy, which is used to raise the temperature of the temperature increasing object.

To increase the heat energy used to raise the temperature, the power transferred in the temperature increasing operation may be increased. The power that is not converted into heat energy is supplied to low voltage terminals or high voltage terminals. In detail, the power is supplied to the high voltage terminals during the period when the voltage increasing operation is performed. As a result, the voltage between the terminals of the high voltage terminals increases. During the period of voltage decreasing operation, power is supplied to the low voltage terminals. This causes the voltage between the terminals of the low voltage terminals to rise. In this case, the voltage between the terminals of at least one of the low voltage terminals and the high voltage terminals reaches the upper voltage limit of the low voltage terminals or the high voltage terminals. That limits the increase in power transferred in the temperature increasing operation. As a result, the efficiency of the temperature increasing operation may be reduced, and the heat energy used to raise the temperature of the temperature increasing object cannot be sufficiently increased.

In this regard, according to the present disclosure, as a temperature increasing operation, control is performed to make the voltage increasing operation unit perform the voltage increasing operation and the voltage decreasing operation. In this case, the high voltage terminals receive power from the low voltage terminals by the voltage increasing operation, while power is supplied to the low voltage terminals by the voltage decreasing operation. The low voltage terminals are supplied power from the high voltage terminals by the voltage decreasing operation, while power is supplied to the high voltage terminals by the voltage increasing operation. As a result, changes in the voltage between the terminals of the low voltage terminals and the high voltage terminals are suppressed, and power is supplied between the voltage increasing operation unit and the voltage decreasing operation unit. Therefore, the voltage between the terminals of low voltage terminals and the high voltage terminals is suppressed from reaching the upper voltage limit during the temperature increasing operation, the power transferred during the temperature increasing operation can be increased. As a result, the heat energy used to raise the temperature of the temperature increasing object can be sufficiently increased, and the efficiency of the temperature increasing operation can be improved.

[BRIEF DESCRIPTION OF THE DRAWING]

The above and other objects, features and advantages of the present disclosure will become clearer with the following detailed description with reference to the accompanying drawings. The drawings are,

Fig. 1 is a diagram of a vehicle of the first embodiment,
Fig. 2 is a diagram of the power conversion device,
Fig. 3 is a time chart showing an example of a voltage increasing operation,
Fig. 4 shows the current path through the power conversion device during voltage increasing operation,
Fig. 5 is a time chart showing an example of a voltage decreasing operation,
Fig. 6 shows the current path through the power conversion device when voltage decreasing operation is performed,
Fig. 7 is a time chart showing an example of temperature increasing operation,
Fig. 8 shows how the switching frequency is set,
Fig. 9 shows how to set the length of the Mode 2 and Mode 4 periods,
Fig. 10 shows the effect of temperature increasing operation,
Fig. 11 shows the effect of temperature increasing operation,
Fig. 12 is a time chart showing an example of voltage increasing operation and voltage decreasing operation according to a second embodiment,
Fig. 13 shows the current paths flowing to the power conversion device and ground when temperature increasing operation is performed,
Fig. 14 is a time chart showing an example of temperature increasing operation,
Fig. 15 shows the effect of suppressing noise current generation,
Fig. 16 shows the configuration of the power conversion device according to the third embodiment,
Fig. 17 is a diagram of the power conversion device according to the fourth embodiment,
Fig. 18 is a time chart showing an example of a voltage decreasing operation,
Fig. 19 shows the current path through the power conversion device and ground when voltage decreasing operation is performed,
Fig. 20 is a diagram of the power conversion device according to another embodiment,
Fig. 21 is a diagram of the power conversion device according to another embodiment,
Fig. 22 is a diagram of the power conversion device according to another embodiment.

[DESCEIPTION OF EMBODIMENTS]

<First Embodiment>

The power conversion device is mounted to a mobile object, such as a vehicle, an aircraft or a ship. In this embodiment, the power conversion device is mounted to a vehicle. The vehicle is, for example, a hybrid vehicle equipped with a motor and an engine, or an electric vehicle including only the motor among the motor and the engine.

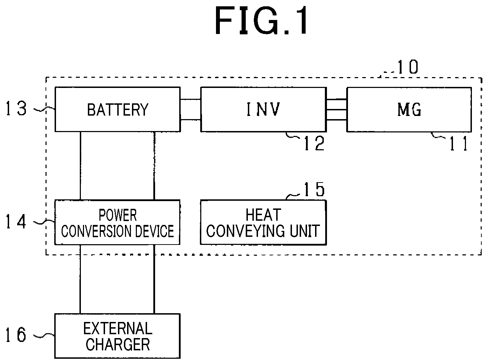

As shown in Figure 1, vehicle 10 includes a motor 11, an inverter 12, a battery 13, a power conversion device 14, and a heat conveying unit 15. The motor 11 is connected to the drive wheels and the engine as a power source via a power splitting mechanism not shown. The motor 11 is connected to inverter 12 and serves as a power source. The inverter 12 is a 3-phase inverter and is connected to the battery 13 (e.g., lithium-ion rechargeable battery or nickel-metal hydride rechargeable battery). For example, the rated voltage of the battery 13 may be 600V to 800V.

The battery 13 is connected to an external charger 16 provided outside the vehicle 10 via the power conversion device 14. The external charger 16 is, for example, a DC quick charger. The battery 13 is charged by DC power input from the external charger 16 when connected to the external charger 16 via the power conversion device 14. For example, the charging voltage of the external charger 16 may be 300 V to 400 V.

The heat conveying unit 15 transfers a heat energy generated in the heat exchange object to the temperature increasing object. The heat conveying unit 15 is configured to absorb the heat generated by the heat exchange object, with the motor 11, the inverter 12, the battery 13, and the power conversion device 14 as the heat exchange object. In this embodiment, the temperature increasing object is the battery13. The heat conveying unit 15 may, for example, be equipped with a circulation path through which cooling water circulates between the heat exchange object and the temperature increasing object, and through which the temperature of the temperature increasing object is increased. The temperature of the temperature increasing object may be increased via this cooling water. Alternatively, the heat conveying unit 15 may be one in which a gas (air) is used as the cooling fluid. The heat conveying unit 15 may be, for example, a heat sink or other component in contact with the heat exchange object and the temperature increasing object without using a cooling fluid.

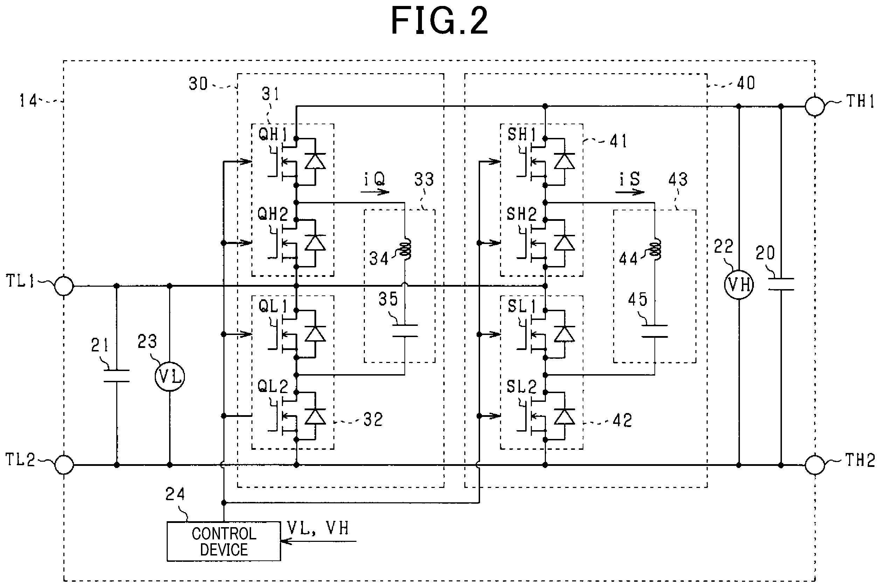

Figure 2 shows a configuration of power conversion device 14. The power conversion device 14 includes a first high voltage terminal TH1 and a second high voltage terminal TH2 as high voltage terminals, and a first low voltage terminal TL1 and a second low voltage terminal TL2 as low voltage terminals. In this embodiment, low voltage terminals TL1 and TL2 are connected to the external charger 16 and high voltage terminals TH1 and TH2 are connected to the battery 13.

The power conversion device14 transforms the voltage input to one of the low voltage terminals TL1 and TL2 and the high voltage terminals TH1 and TH2, and outputs it to the other. In this embodiment, the power conversion device 14 functions as a boost converter with a boost ratio of 2 and includes a function to boost the charging voltage input from the external charger 16 by a factor of 2 and output it to battery 13. As a result, battery 13 is charged.

The power conversion device 14 includes a high voltage condenser 20 and a low voltage condenser 21. The first side of the high voltage condenser 20 is connected to the first high voltage terminal TH1, the second side of the high voltage condenser 20 is connected to the second high voltage terminal TH2, the first side of the low voltage condenser 21 is connected to the first low voltage terminal TL1 and the second side of the low voltage condenser21 is connected to the second low voltage terminal TL2.

The power conversion device 14 includes a voltage sensor for high voltage terminals 22, a voltage sensor for low voltage terminals 23, and a control device 24. The sensor for high voltage terminals 22 detects the voltage between the terminals VH of the high voltage terminals TH1 and TH2, and the voltage sensor for low voltage terminals 23 detects the voltage VL between terminals low voltage terminalsTL1 and TL2. The detected values of voltage sensor for high voltage terminals 22 and voltage sensor for low voltage terminals 23 are input to control device 24.

The power conversion device 14 includes a plurality of power conversion units. In this embodiment, the power conversion device 14 includes a first power conversion unit 30 and a second power conversion unit 40.

The first power conversion unit 30 includes a first upper arm 31, a first lower arm 32 and a first resonator 33. Each in the first upper arm 31 and the first lower arm 32 is a series connection of voltage-controlled semiconductor switches. The first resonator 33 is a series connection of a first reactor 34 and a first capacitor 35. In this embodiment, each of the semiconductor switches in the first upper arm 31 and the first lower arm 32 is N-channel MOSFETs including body diodes.

The drain of an upper switch QH1 in the first upper arm 31 is connected to the first high voltage terminal TH1 and the source of the upper switch QH1 in the first upper arm 31 is connected to the drain of a lower switch QH2 in the first upper arm 31. The source of the lower switch QH2 in the first upper arm31 is connected to the first low voltage terminal TL1 and the drain of the upper switch QL1 in the first lower arm 32. The drain of a lower switch QL2 in the first lower arm 32 is connected to the source of the upper switch QL1 in the first lower arm 32, and the source of the lower switch QL2 in the first lower arm 32 is connected to the second high voltage terminal TH2 and the second low voltage terminal TL2. The first side of the first reactor 34 is connected to a connection point of the source of the upper switch QH1 and the drain of the lower switch QH2 in the first upper arm 31. The second side of the first reactor 34 is connected to the first side of the first capacitor 35. The second side of the first capacitor 35 is connected to the connection point of the source of the upper switch QL1 and the drain of the lower switch QL2 in the first lower arm 32.

The second power conversion unit 40 includes a second upper arm 41, a second lower arm 42, and a second resonator 43. In this embodiment, the semiconductor switches in the second upper arm 41 and the second lower arm 42 are N-channel MOSFETs including body diodes.

The drain of an upper switch SH1 in the second upper arm 41 is connected to the first high voltage terminal TH1, and the source of an upper switch SH1 in the second upper arm 41 is connected to the source of a lower switch SH2 in the second upper arm 41. The drain of a lower switch SL2 in the second lower arm 42 is connected to the source of the upper switch SL1 in the second lower arm 42, and the source of a lower switch SL2 in the second lower arm 42 is connected to the second high voltage terminal TH2 and second low voltage terminal TL2. The first side of the second reactor 44 is connected to a connection point of the source of the upper switch SH1 and the drain of the lower switch SH2 in the second upper arm 41. The second side of the second reactor 44 is connected to the first side of the second capacitor 45. The second side of the second capacitor 45 is connected to a connection point of the source of the upper switch SL1 and the drain of the lower switch SL2 in the second lower arm 42.

In this embodiment, the upper switches QH1, SH1 of the respective upper arms 31, 41 correspond to "first upper arm switches" and the lower switches QH2, SH2 of the respective upper arms 31, 41 correspond to "second upper arm switches". The upper switches QL1, SL1 of each of the lower arms 32, 42 correspond to "first lower arm switches" and the lower switches QL2, SL2 of each of the lower arm 32, 42 correspond to "second lower arm switches".

The functions provided by the control device 24 can be provided, for example, by software recorded in a substantive memory device and a computer executing the software, hardware, or a combination thereof.

The control device 24 turns on and off each of the switches QH1, QH2, QL1, and QL2 of the first power conversion unit 30, so that the first power conversion unit 30 is set in one of Mode 1 to Mode 4. In the Mode 1 state, the upper switch QH1 in the first upper arm 3 1 and the upper switch QL1 in the first lower arm 32 are turned on, and the lower switch QH2 in the first upper arm 31 and the lower switch QL2 in the first lower arm 32 are turned off. In the Mode 2 state, the upper switch QH1 in the first upper arm 31 and the lower switch QL2 in the first lower arm 32 are turned on, and the lower switch QH2 in the first upper arm 31 and the lower switch QL1 of first lower arm 32 are turned off.

In the Mode 3 state, the lower switch QH2 in the first upper arm31 and the lower switch QL2 in the first lower arm 32 are turned on, and the upper switch QH1 in the first upper arm 31 and the upper switch QL1 in the first lower arm 32 are turned off. In the Mode 4 state, the lower switch QH2 in the first upper arm 31 and the upper switch QL1 in the first lower arm 32 are turned on, and the upper switch QH1 in the first upper arm 31 and the upper switch QL2 in the first lower arm 32 are turned off.

As in the case of the first power conversion unit 30, the control device 24 turns on and off each of the switches SH1, SH2, SL1, and SL2 of the second power conversion unit 40, so that the second power conversion unit 40 is set in one of the Mode 1 to the Mode 4.

The control device 24 causes the first power conversion unit 30 and the second power conversion unit 40 to operate as one of the voltage increasing operation unit and the voltage decreasing operation unit by having the first power conversion unit 30 and the second power conversion unit 40 repeatedly perform one cycle of processing consisting of the Mode 1 to the Mode 4. The voltage increasing operation increases the voltage input from the low voltage terminals TL1 and TL2 and outputs the increased voltage to the high voltage terminals TH1 and TH2. The voltage decreasing operation decreases the voltage input from the high voltage terminals TH1 and TH2 and outputs the decreased voltage to the low voltage terminals TL1 and TL2. The control device 24 performs a temperature increasing operation to increase the temperature of the battery13 as a temperature increasing object by performing the voltage increasing operation and the voltage decreasing operation. The temperature increasing operation is described below.

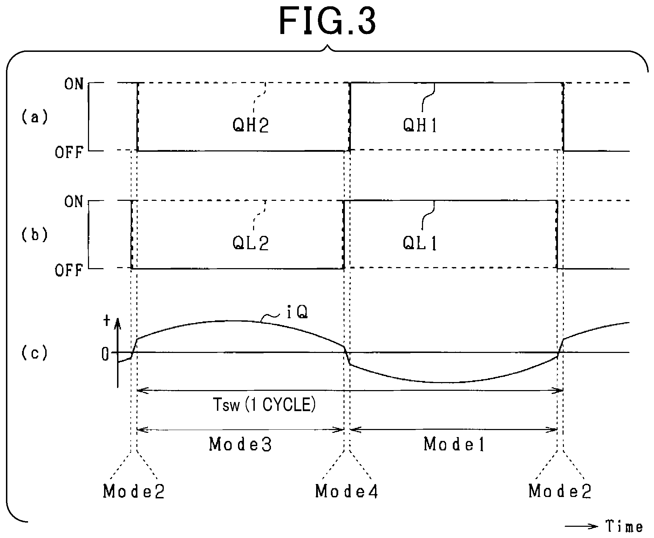

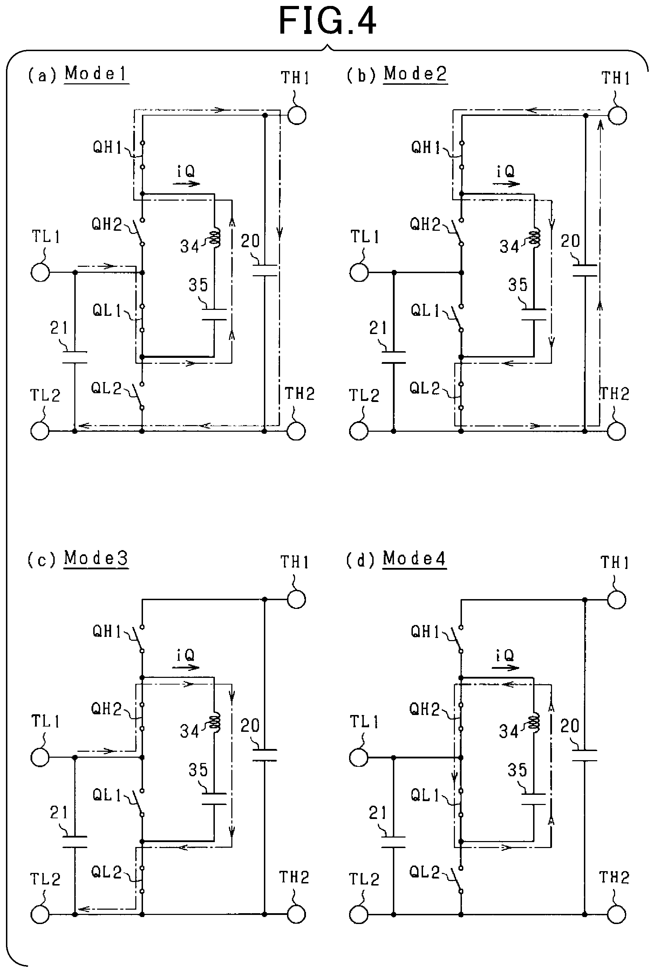

First, the process of having the first power conversion unit 30 perform the voltage increase operation is explained using figures 3 and 4. In the (a) part of fig. 3, the solid line shows the on and off states of the upper switch QH1 in the first upper arm 31, and the dashed line shows the on and off states of the lower switch QH2 in the first upper arm 31. In part (b) of figure 3, the solid line shows the on and off states of the upper switch QL1 in the first lower arm 32, and the dashed line shows the on and off states of the lower switch QL2 of first lower arm 32. Part (c) of figure 3 shows the current iQ flowing in the first resonator 33. Here, the sign of the current iQ flowing in the first resonator 33 is positive in the direction of current flow from the first side of the first reactor 34 to the second side of the first reactor 34.

When operating the first power conversion unit 30 as a voltage increasing operation unit, the control device 24 causes the process consisting of the Mode 1, the Mode 2, the Mode 3, and the Mode 4 to be repeated in this order. The switching cycle Tsw is the total period of the periods of each of the Mode 1 to the Mode 4. The current path through the power conversion device 14 during the voltage increasing operation is shown in the (a) to (d) parts of figure 4 for each period of the Mode 1 to the Mode 4. In figure 4, the second power conversion unit 40 and others are omitted.

During the period when the first power conversion unit 30 is set to the Mode 1, current flows in a closed circuit including the first low voltage terminal TL1, the upper switch QL1 in the first lower arm 32, the first capacitor 35, the first reactor 34, the first upper switch QH1 of the upper arm 31, the high voltage condenser 20 and the second low voltage terminal TL2. In this case, the current flows in the direction that the sign of the current iQ flowing in the first resonator 33 is negative. As a result, the first capacitor 35 discharges and power is supplied from the low voltage terminals TL1 and TL2 to the high voltage terminals TH1 and TH2. The reason why the direction of the current in the Mode 1 period is set in the direction where the sign of the current iQ flowing in the first resonator 33 is negative is because the sign of the current iQ flowing in the first resonator 33 is negative in the Mode 4 period immediately before the Mode 1, as will be described later.

During the period when the first power conversion unit 30 is set to the Mode 2, current flows in a closed circuit including the high voltage condenser 20, the upper switch QH1 in the first upper arm 31, the first reactor 34, the first capacitor 35, and the lower switch QL2 in the first lower arm 32. During the period when the first power conversion unit 30 is set to the Mode 2, the direction of the current is reversed from the direction of the current during the previous Mode 1 period. In other words, the sign of the current iQ flowing in the first resonator 33 switches from negative to positive.

During the period when the first power conversion unit 30 is set to the Mode 3, current flows in a closed circuit including the first low voltage terminal TL1, the lower switch QH2 in the first upper arm 31, the first reactor 34, the first capacitor 35, the lower switch QL2 of the lower arm 32 and the second low voltage terminal TL2. In this case, the current flows in the same direction as the current in the previous Mode 2 period, and the sign of the current iQ flowing in the first resonator 33 is positive. As a result, the first capacitor 35 is charged.

During the period when the first power conversion unit 30 is set to the Mode 4, current flows in a closed circuit including the lower switch QH2 in the first upper arm 31, the upper switch QL1 in the first lower arm 32, the first capacitor 35 and the first reactor 34. During the period when the first power conversion unit 30 is as the Mode 4, the direction of the current reverses from the direction of the current during the previous Mode 3 period. In other words, the sign of the current iQ flowing in the first resonator 33 switches from positive to negative.

By performing the above-mentioned voltage increasing operation in the first power conversion unit 30, the voltage input to the low voltage terminals TL1 and TL2 is increased, and the increased voltage is output to the high voltage terminals TH1 and TH2. In the voltage increasing operation, the longer the duration of the Mode 2 and the Mode 4, the larger the amplitude of the current iQ flowing in the first resonator 33. In this case, the magnitude of the power supplied from low voltage terminals TL1 and TL2 to high voltage terminals TH1 and TH2 increases.

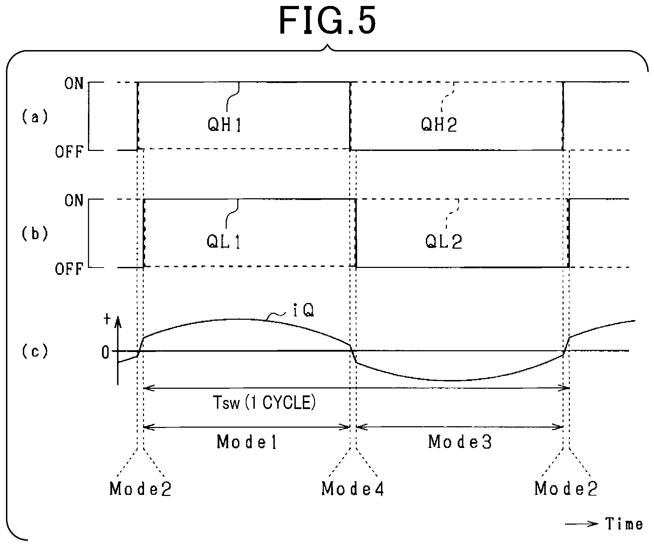

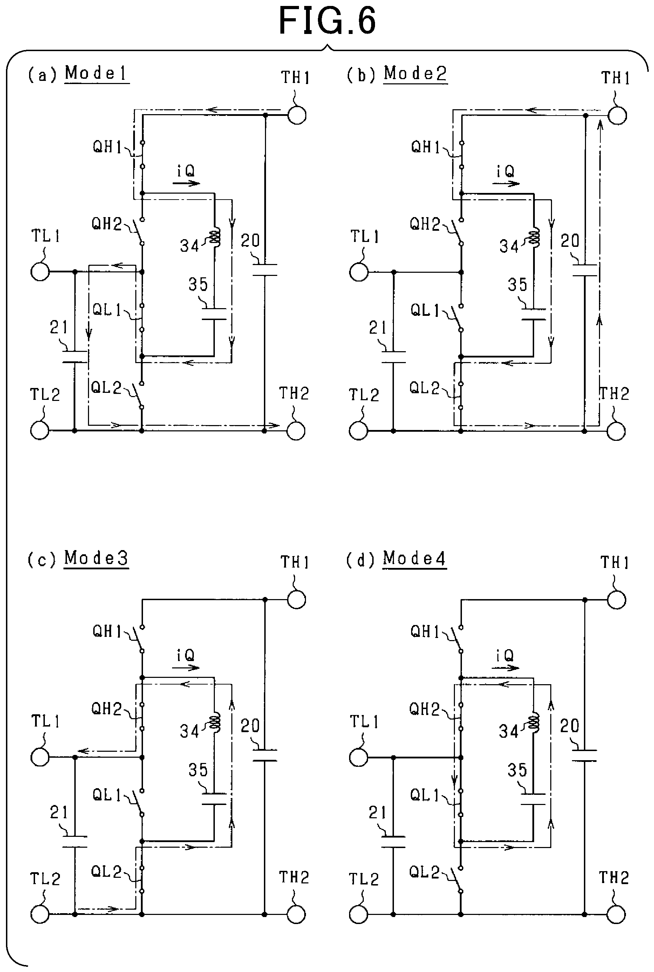

Next, the process of having the first power conversion unit 30 perform the voltage decreasing operation will be explained, using figures 5 and 6. In figure 5, the parts (a) through (c) correspond to the parts (a) through (c) in figure 3.

When the control device 24 operates the first power conversion unit 30 as the voltage decreasing operation unit, the control device 24 causes the process consisting of the Mode 1, the Mode 4, the Mode 3, and the Mode 2 to be repeated in this order. The switching cycle Tsw is the total period of the periods of each of the Mode 1 to the Mode 4. The current paths flowing to the power conversion device 14 during the voltage decreasing operation are shown in the (a) to (d) parts of figure 6 for each period of the Mode 1 to the Mode 4. In figure 6, the second power conversion unit 40 and others are omitted.

During the period when the first power conversion unit 30 is set to the Mode 1, current flows in a closed circuit including the first high voltage terminal TH1, the upper switch QH1 in the first upper arm 31, the first reactor 34, the first capacitor 35, the upper switch QL1 in the first lower arm 32, the low voltage condenser 21 and the second high voltage terminal TH2. In this case, the current flows in the direction that the sign of the current iQ flowing in the first resonator 33 is positive. As a result, the first capacitor 35 is charged and power is supplied from the high voltage terminals TH1 and TH2 to the low voltage terminals TL1 and TL2. The reason why the direction of the current in the Mode 1 period is in the direction where the sign of the current iQ flowing in the first resonator 33 is positive is because the sign of the current iQ flowing in the first resonator 33 is positive in the Mode 2 period immediately before the Mode 1, as described below.

During the period when the first power conversion unit 30 is set to the Mode 4, current flows in a closed circuit including the lower switch QH2 in the first upper arm 31, the upper switch QL1 in the first lower arm 32, the first capacitor 35 and the first reactor 34. During the period when the first power conversion unit 30 is set to the Mode 4, the direction of the current reverses from the direction of the current during the previous Mode 1 period. In other words, the sign of the current iQ flowing in the first resonator 33 switches from positive to negative.

During the period when the first power conversion unit 30 is set to the Mode 3, current flows in a closed circuit including the second low voltage terminal TL2, the lower switch QL2 in the first lower arm 32, the first capacitor 35, the first reactor 34, the lower switch QH2 of the upper arm 31 and first low voltage terminal TL1. In this case, the current flows in the same direction as the current in the previous Mode 4 period, and the sign of the current iQ flowing in the first resonator 33 is negative. As a result, the first capacitor 35 discharges.

During the period when the first power conversion unit 30 is set to the Mode 2, current flows in a closed circuit including the high voltage condenser 20, the upper switch QH1 in the first upper arm 31, the first reactor 34, the first capacitor 35, and the lower switch QL2 in the first lower arm 32. During the period when the first power conversion unit 30 is set to the Mode 2, the direction of the current is reversed from the direction of the current during the previous Mode 3 period. In other words, the sign of the current iQ flowing in the first resonator 33 switches from negative to positive.

By performing the above-mentioned voltage decreasing operation in the first power conversion unit 30, the voltage input from the high voltage terminals TH1 and TH2 is decreased, and the decreased voltage is output to the low voltage terminals TL1 and TL2.

In the voltage decreasing operation, the longer the duration of Mode 2 and Mode 4, the larger the amplitude of the current iQ flowing in the first resonator 33. In this case, the magnitude of the power supplied from high voltage terminals TH1 and TH2 to low voltage terminals TL1 and TL2 increases.

Next, the temperature increasing operation is explained. Unlike this embodiment, the temperature increasing operation to increase the temperature of the battery 13 that is the temperature increasing object, it is conceivable to alternately perform a voltage increasing operation and a voltage decreasing operation. In this case, electric power is transferred between low voltage terminals TL1 and TL2 and high voltage terminals TH1 and TH2. Then, a part of the transferred power is converted into heat energy, and the converted heat energy is transferred to the battery13 via the heat conveying unit15. As a result, the heat energy raises the temperature of the battery 13.

To increase the heat energy used to raise the temperature of the battery13, it is possible to increase the power transferred in the temperature increasing operation. However, in the above case, the power that is not converted into heat energy is supplied to the low voltage terminals TL1 and TL2 or the high voltage terminals TH1 and TH2. In detail, during the period of voltage increasing operation, power is supplied to the high voltage terminals TH1 and TH2. As a result, the voltage between terminals VH of the high voltage terminals TH1 and TH2 increases. During the period when voltage decreasing operation is performed, power is supplied to the low voltage terminals TL1 and TL2. As a result, the voltage between terminals VL of the low voltage terminals TL1 and TL2 increases. In this case, when the voltage between terminals VL of the low voltage terminals TL1 and TL2 reaches the upper voltage limit determined according to the withstand voltage of low voltage condenser 21 or when the voltage between terminals VH of the high voltage terminals TH1 and TH2 reaches the upper voltage limit determined according to the withstand voltage of high voltage condenser 20. This may cause the voltage VL to be supplied and received during temperature increasing operation. This may limit the ability to increase the power transferred in the temperature increasing operation. As a result, the heat energy used to raise the temperature of the battery 13 may not be sufficiently increased, and the efficiency of the temperature increasing operation may decrease.

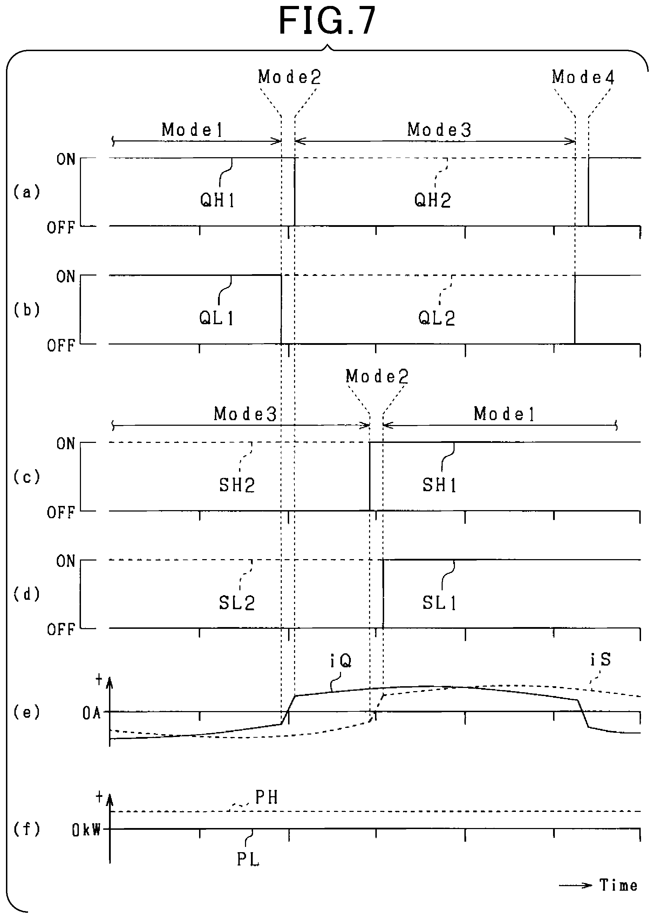

Therefore, in this embodiment, the control device 24 controls one of the first power conversion unit 30 and the second power conversion unit 40 to perform the voltage increasing operation and the other to perform the voltage decreasing operation as the temperature increasing operation. Here, using figure. 7, the temperature increasing operation in the case where the first power conversion unit 30 performs the voltage increasing operation and the second power conversion unit 40 performs the voltage decreasing operation is shown.

The (a) and (b) parts of figure 7 correspond to the (a) and (b) parts of figure 3 respectively. In the part (c) of figure 7, the solid line shows the on and off states of the upper switch SH1 in the second upper arm 41, and the dashed line shows the on and off states of the lower switch SH2 in the second upper arm 41. In the (d) part of figure 7, the solid line shows the on and off states of the upper switch SL1 in the second lower arm 42, and the dashed line shows the on and off states of the lower switch SL2 in the second lower arm 42. In the (e) part of figure 7, the solid line shows the transition of the current iQ flowing in the first resonator 33 and the dashed line shows the transition of the current iS flowing in the second resonator 43. In the (f) part of figure 7, the solid line shows the transition of the power PL supplied to the low voltage terminals TL1 and TL2, and the dashed line shows the transition of the output power PH of the battery 13.

The control device 24 operates the first power conversion unit 30 as the voltage increasing operation unit in the temperature increasing operation. In other words, the first power conversion unit 30 repeats the process consisting of the Mode 1, the Mode 2, the Mode 3, and the Mode 4 in this order. In this case, power is supplied from low voltage terminals TL1 and TL2 to high voltage terminals TH1 and TH2. On the other hand, the control device 24 operates the second power conversion unit 40 as the voltage decreasing operation unit in the temperature increasing operation. In other words, the second power conversion unit 40 repeats the process consisting of the Mode 1, the Mode 4, the Mode 3, and the Mode 2 in this order. In this case, power is supplied from high voltage terminals TH1 and TH2 to low voltage terminals TL1 and TL2.

The control device 24 operates the first power conversion unit 30 as the voltage increasing operation unit and the second power conversion unit 40 as the voltage decreasing operation unit in the temperature increasing operation. In this case, the supply of power to low voltage terminals TL1 and TL2 by the voltage decreasing operation and the output of power from low voltage terminals TL1 and TL2 by the voltage increasing operation are performed in parallel. The output of power from low voltage terminals TL1 and TL2 by voltage increasing operation is performed in parallel. This suppresses changes in the voltage between terminals of the low voltage terminals TL1 and TL2 (VL) and the voltage between terminals of the high voltage terminals TH1 and TH2 (VH) during the temperature increasing operation.

During the temperature increasing operation, current circulates between the first power conversion unit 30 and the second power conversion unit 40. The current flows in the first power conversion unit 30 as indicated by the iQ flowing in the first resonator 33. This causes switching losses that occur as a result of turning on and off each of the switches QH1, QH2, QL1, and QL2, and conduction losses that occur as a result of current flowing in each of the switches QH1, QH2, QL1, and QL2 in the first power conversion unit 30. In addition, the current flows in the second power conversion unit 40 as indicated by the transition of the current iS flowing in the second resonator 43. This causes switching losses that occur as a result of turning on and off each of the switches SH1, SH2, SL1, and SL2, and conduction losses that occur as a result of the current flowing in each of the switches SH1, SH2, SL1, and SL2 in the second power conversion unit 40. The switching loss and the conduction loss that occurs in each of the switches QH1, QH2, QL1, QL2, SH1, SH2, SL1, SL2 is converted into heat energy. The heat energy is transferred to the batteries13 via the heat conveying unit15. As a result, the temperature of battery 13 increases.

In this embodiment, the power PL supplied to the low voltage terminals TL1 and TL2 is maintained at approximately 0W, as shown in (f) part of figure 7. Therefore, the change in the voltage between the terminals VL of the low voltage terminals TL1 and TL2 during temperature increasing operation is suppressed. The output power PH of battery 13 is greater than 0W because the output power PH of battery 13 is not converted into heat energy by the temperature increasing operation. The reason why the output power PH of battery 13 is greater than 0W is because the power converted into heat energy by the temperature increasing operation is output from battery 13.

The control device 24 sets switching frequency fsw of the first power conversion unit 30 and the second power conversion unit 40 when the first power conversion unit 30 and the second power conversion unit 40 are operated to perform either the voltage increasing operation unit or the voltage decreasing operation unit. In this embodiment, the control device 24 sets the switching frequency fsw of the first power conversion unit 30 and the second power conversion unit 40 when the temperature increasing operation is performed and when the first power conversion unit 30 and the second power conversion unit 40 are operated to perform one of the voltage decreasing operation units. The switching frequency fsw is the reciprocal of the switching period Tsw. In this embodiment, the value of the switching frequency fsw is different when the control device 24 performs the temperature increasing operation and when the first power conversion unit 30 and the second power conversion unit 40 are operated to perform only one of the voltage increasing operation and the voltage decreasing operation.

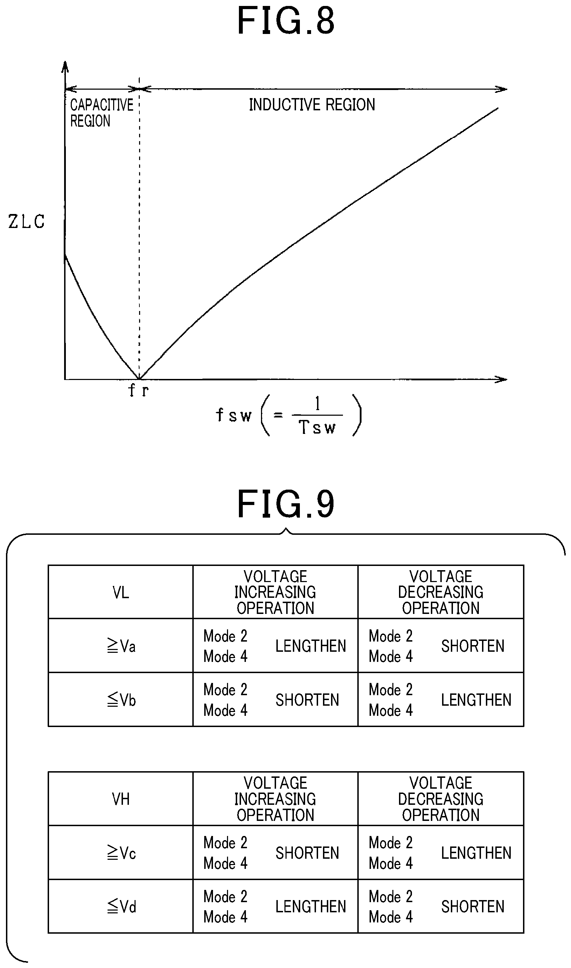

Figure 8 is used to explain how the switching frequency fsw of the first power conversion unit30 and second power conversion unit 40 is set. Figure 8 shows the relationship between the switching frequency fsw and the impedance ZLC of the first resonator 33 and second resonator 43. The impedance ZLC of the first resonator 33 and second resonator 43 is the minimum value when the switching frequency fsw is equal to the resonance frequency fr. The resonance frequency fr of the first resonator 33 is determined by the inductance of the first reactor 34 and the capacitance of the first capacitor 35, and the resonance frequency fr of the second resonator 43 is determined by the inductance of the second reactor 44 and the capacitance of the second capacitor 45.

In the capacitive region where the switching frequency fsw is lower than the resonant frequency fr, the higher the switching frequency fsw is, the lower the impedance ZLC of the first resonator 33 and second resonator 43. In the inductive region where the switching frequency fsw is higher than the resonant frequency fr, the higher the switching frequency fsw is, the higher the impedance ZLC of the first resonator 33 and second resonator 43.

It is conceivable to have the first power conversion unit 30 and the second power conversion unit 40 perform only one of the voltage increasing operation and the voltage decreasing operation in order to operate the power conversion device 14 as a increase /decrease voltage converter. In this case, the first power conversion unit 30 and the second power conversion unit 40 may be required to perform only one of the voltage increasing operation and the voltage decreasing operation to improve the ratio of output power to input power. In this case, to improve the ratio of output power to input power, the switching frequency fsw should be set near the resonance frequency fr at which the impedance ZLC of the first resonator 33 and the second resonator 43 is minimum. Therefore, in this embodiment, the control device 24 can only operate the first power conversion unit 30 and the second power conversion unit 40 to perform one of the voltage increasing operation and the voltage decreasing operation. decreasing operation, the switching frequency fsw of the first power conversion unit 30 is set to the resonance frequency fr of the first resonator 33, and the switching frequency of the second power conversion unit 40 is set to the resonance frequency fr of the second resonator 43. The switching frequency fsw of the first power conversion unit 30 and second power conversion unit 40 is not limited to being the resonant frequency fr of the first resonator 33 and second resonator 43. It may be set to a frequency near the resonant frequency fr within the range where a decrease in the ratio of output power to input power is not a problem.

On the other hand, in the case of the temperature increasing operation, it is desirable to set the switching frequency fsw so that the impedance ZLC of the first resonator 33 and second resonator 43 is larger than the minimum value to improve the efficiency of converting the input power into the heat energy. Therefore, the control device 24 sets the switching frequency fsw of the first power conversion unit 30 and the second power conversion unit 40 in the case of temperature increasing operation, to a value different from the resonance frequency fr of the first resonator 33 and the second resonator 43.

During the period when the first power conversion unit 30 and the second power conversion unit 40 are set to either the Mode 2 or the Mode 4, the current IQ flowing in the first resonator 33 and the current IS flowing the second resonator 43 and are controlled, the first power conversion unit 30 and the second power conversion unit 40 can operate in one of the voltage increasing operation and the voltage decreasing operation. The control of the currents IQ and IS flowing in the first resonator 33 and second resonator 43 is performed using the inductance components of the first resonator 33 and second resonator 43. Therefore, it is considered that the controllability of the currents IQ and IS flowing in the first resonator 33 and second resonator 43 is improved by setting the switching frequency fsw of the first resonator 33 and second resonator 43 to a value in the inductive region. This is thought to improve the controllability of the currents IQ and IS flowing in the first and second resonators.

Therefore, the control device 24, when the temperature increasing operation is performed, raises the switching frequency fsw of the first power conversion unit 30 higher than the resonance frequency fr of the first resonator 33 and raises the switching frequency fsw of the second power conversion unit 40 higher than the resonance frequency fr of the second resonator 43. For example, the control device 24 sets the switching frequency fsw of the first resonator 33 and the second resonator 43 to twice the resonant frequency fr of the first resonator 33 and the second resonator 43. In this case, the switching frequency fsw of the first power conversion unit 30 and the second power conversion unit 40 are set higher than the switching frequency fsw when the first power conversion unit 30 and the second power conversion unit 40 are operated to perform only one of the voltage increasing operation and the voltage decreasing operation. The switching frequency fsw of the first power conversion unit 30 and the second power conversion unit 40 is not limited to twice the resonance frequency fr of the first resonator 33 and the second resonator 43, the switching frequency fsw of the first power conversion unit 30 and the second power conversion unit 40 may be set to a value such as 1.5 times, 3 times, or 4 times the resonance frequency fr of the first resonator 33 and the second resonator 43, and so on.

During the temperature increasing operation, an error may occur in the power supplied to at least one of the low voltage terminals TL1 and TL2 and the high voltage terminals TH1 and TH2. In this case, the power supplied from one of the low voltage terminals TL1 and TL2 and high voltage terminals TH1 and TH2 to the other may become excessive, resulting in an overvoltage abnormal condition. There is also concern that the power supplied from one of the low voltage terminals TL1 and TL2 and the high voltage terminals TH1 and TH2 to the other may be insufficient, resulting in a low-voltage anomaly condition. Therefore, it is desirable that the voltage between terminals VL of low voltage terminals TL1 and TL2 and the voltage between terminals VH of high voltage terminals TH1 and TH2 are controlled while the temperature increasing operation is performed.

The voltage between the terminals VL of low voltage terminals TL1 and TL2 varies according to the power supplied to the low voltage terminals TL1 and TL2 and the power output from the low voltage terminals TL1 and TL2. The voltage between the terminals VH of the high voltage terminals TH1 and TH2 varies according to the power supplied to high voltage terminals TH1 and TH2 and the power output from high voltage terminals TH1 and TH2. In this regard, by adjusting the power transferred by the voltage increasing and decreasing operations, the voltage between the terminals VL of the low voltage terminals TL1 and TL2, and the voltage between the terminals VH of the high voltage terminalsTH1 and TH2 can be controlled by adjusting the power transferred by the voltage increasing operation and the voltage decreasing operation.

Therefore, the control device 24 sets, in the temperature increasing operation, the length of at least one of the periods of the Mode 2 and the Mode 4 in the voltage increasing operation and the voltage decreasing operation based on at least one of the voltage between the terminals VL of the low voltage terminals TL1 and TL2 from the voltage sensor for low voltage terminals 23 and the voltage between the terminals VH of the high voltage terminals TH1 and TH2 from the voltage sensor for high voltage terminals 23. The control device 24 sets the length of the period of the Mode 2 and the Mode 4 in the temperature increasing operation and the voltage decreasing operation based on the acquired voltage between the terminals VH and VL. The control device 24 corresponds to the "acquiring unit".

Specifically, as shown in figure 9, when the control device 24 determines that the voltage between the terminals VL of the low voltage terminals TL1 and TL2 is equal to or greater than a first threshold Va, the control device 24 lengthens the period of the Mode 2 and the Mode 4 in the power conversion unit in which the voltage increasing operation is performed among first power conversion unit 30 and second power conversion unit 40. This increases the power output from the low voltage terminals TL1 and TL2 due to the voltage increasing operation. Also, when the control device 24 determines that the voltage between the terminals VL of the low voltage terminals TL1 and TL2 is equal to or greater than the first threshold Va, the control device 24 shortens the period of the Mode 2 and the Mode 4 in the power conversion unit in which the voltage decreasing operation is performed among first power conversion unit 30 and second power conversion unit 40. This decreases the power supplied to the low voltage terminals TL1 and TL2 due to the voltage decreasing operation. In this case, the voltage between terminals VL of low voltage terminals TL1 and TL2 decreases.

When the control device 24 determines that the voltage between the terminals VL of the low voltage terminals TL1 and TL2 is equal to or less than a second threshold Vb, which is lower than the first threshold value Va, the control device 24 shortens the period of the Mode 2 and the Mode 4 in the power conversion unit in which the voltage increasing operation is performed among first power conversion unit 30 and second power conversion unit 40. This decreases the power output from the low voltage terminals TL1 and TL2 due to the voltage increasing operation. Also, when the control device 24 determines that the voltage between the terminals VL of the low voltage terminals TL1 and TL2 is equal to or less than the second threshold Vb, the control device 24 lengthens the period of the Mode 2 and the Mode 4 in the power conversion unit in which the voltage decreasing operation is performed among first power conversion unit 30 and second power conversion unit 40. This increases the power supplied to the low voltage terminals TL1 and TL2 due to the voltage decreasing operation. In this case, the voltage between terminals VL of the low voltage terminals TL1 and TL2 increases.

When the control device 24 determines that the voltage between the terminals VH of the high voltage terminals TH1 and TH2 is equal to or greater than a third threshold Vc, the control device 24 shortens the period of the Mode 2 and the Mode 4 in the power conversion unit in which the voltage increasing operation is performed among first power conversion unit 30 and second power conversion unit 40. This decreases the power supplied to the high voltage terminals TH1 and TH2 due to the voltage increasing operation. Also, when the control device 24 determines that the voltage between the terminals VH of the high voltage terminals TH1 and TH2 is equal to or greater than a third threshold Vc, the control device 24 lengthens the period of the Mode 2 and the Mode 4 in the power conversion unit in which the voltage decreasing operation is performed among first power conversion unit 30 and second power conversion unit 40. This increases the power output to the high voltage terminals TH1 and TH2 due to the voltage decreasing operation. In this case, the voltage between terminals VH of the high voltage terminals TH1 and TH2 decreases.

When the control device 24 determines that the voltage between the terminals VH of the high voltage terminals TH1 and TH2 is equal to or less than a fourth threshold Vd, which is lower than the third threshold Vc, the control device 24 lengthens the period of the Mode 2 and the Mode 4 in the power conversion unit in which the voltage increasing operation is performed among first power conversion unit 30 and second power conversion unit 40. This increases the power supplied to the high voltage terminals TH1 and TH2 due to the voltage increasing operation. Also, when the control device 24 determines that the voltage between the terminals VH of the high voltage terminals TH1 and TH2 is equal to or less than the fourth threshold Vd, the control device 24 shortens the period of the Mode 2 and the Mode 4 in the power conversion unit in which the voltage decreasing operation is performed among first power conversion unit 30 and second power conversion unit 40. This decreases the power output to the high voltage terminals TH1 and TH2 due to the voltage decreasing operation. In this case, the voltage between terminals VH of the high voltage terminals TH1 and TH2 increases.

The control device 24 may repeat the process of setting the lengths of the periods of the Mode 2 and the Mode 4 in the above-mentioned voltage increasing operation and voltage decreasing operation in a predetermined control cycle. In each control cycle, the amount of change when the length of the period of the Mode 2 and the Mode 4 are lengthened or shortened may be a fixed value, or a variable value based on the value of the voltage between terminals VH of the high voltage terminals TH1 and TH2 or the voltage between terminals VL of the low voltage terminals TL1 and TL2.

When control device 24 determines that the voltage between the terminals VL of the low voltage terminals TL1 and TL2 is within the first range and the voltage between the terminals VH of the high voltage terminals TH1 and TH2 is within the second range, the length of the period of the Mode 2, and the Mode 4 may be maintained. The first range is the voltage range defined by the first threshold Va and the second threshold Vb, and the second range is the voltage range defined by the third threshold Vc and the fourth threshold Vd. When the control device 24 determines that the voltage between the terminals VL of the low voltage terminals TL1 and TL2 is within the first range and the voltage between the terminals VH of the high voltage terminals TH1 and TH2 is within the second range, the length of the period of the Mode 2 and the Mode 4 may be set to the default value instead of maintained the same. The default value is the length of the Mode 2 and the Mode 4 that were set before it was determined that the voltage between the terminals VL of the low voltage terminals TL1 and TL2 is outside the first range or the voltage between the terminals VH of the high voltage terminals TH1 and TH2 is outside the second range.

The first threshold Va and the second threshold Vb may be set based on the breakdown voltage of the low voltage terminals TL1 and TL2. The third threshold Vc and the fourth threshold Vd may be set based on the breakdown voltage of the high voltage terminals TH1 and TH2.

According to this embodiment detailed above, the following effects can be achieved.

As the temperature increasing operation, the first power conversion unit 30 performs the voltage increasing operation, and the second power conversion unit 40 performs the voltage decreasing operation is performed by the second power conversion unit 40. In this case, the high voltage terminals TH1 and TH2 are supplied power from the low voltage terminals TL1 and TL2 by the voltage increasing operation, while power is output to the low voltage terminals TL1 and TL2 by the voltage decreasing operation. At the low voltage terminals TL1 and TL2, power is supplied from the high voltage terminals TH1 and TH2 by the voltage decreasing operation, while power is output to high voltage terminals TH1 and TH2 by the voltage increasing operation. As a result, during the temperature increasing operation, changes in the voltage between terminals VL of the low voltage terminals TL1 and TL2 and the voltage between terminals VH of the high voltage terminals TH1 and TH2 are suppressed, and power is transferred between the first power conversion unit 30 and the second power conversion unit 40. Therefore, during the temperature increasing operation, the voltage between the terminals VL of the low voltage terminals TL1 and TL2 and the voltage between the terminals VH of the high voltage terminals TH1 and TH2 are suppressed from reaching the upper voltage limit, and the power transferred in the temperature increasing operation can be increased. As a result, the heat energy used to raise the temperature of the battery13 can be sufficiently increased, and the efficiency of the temperature increasing operation can be improved.

The high voltage terminals TH1 and TH2 are connected to battery13 and the low voltage terminals TL1 and TL2 are connected to the external charger 16. In this case, the possible input/output power of battery13 may decrease due to the low temperature of battery13. Therefore, there is a concern that in a situation where the temperature of battery 13 is low, the efficiency of the temperature increasing operation may be reduced because the ability to increase the power transferred in the temperature increasing operation may be limited.

In this embodiment, where the voltage increasing operation and the voltage decreasing operation are performed in parallel as the temperature increasing operation, the electric power output from the battery 13 is the electric power converted into heat energy by the temperature increasing operation. This makes it possible to suppress the increase in the power output from the battery13 compared to the control in the comparative example where the voltage increasing operation and the voltage decreasing operation are alternately performed as the temperature increasing operation. Therefore, even in a situation where the input/output power of the battery 13 is low due to the low temperature of the battery 13, the occurrence of a situation where the increase in the power transferred in the temperature increasing operation is limited can be suppressed. As a result, the efficiency of temperature increasing operation can be improved.

The power conversion device 14 includes a function to charge the battery 13 by increasing the voltage input from the external charger 16 and outputting it to the battery 13. In this case, there is a concern that the low ambient temperature of the power conversion device 14 may cause the power input/output to battery 13 to decrease, resulting in a longer charging time for battery 13. In this regard, the temperature of battery 13 can be quickly increased by performing the temperature increasing operation of this embodiment. As a result, the power that can be input/output to/from the battery13 is increased, and then the battery13 is recharged. As a result, the charging time of battery 13 can be prevented from becoming longer.

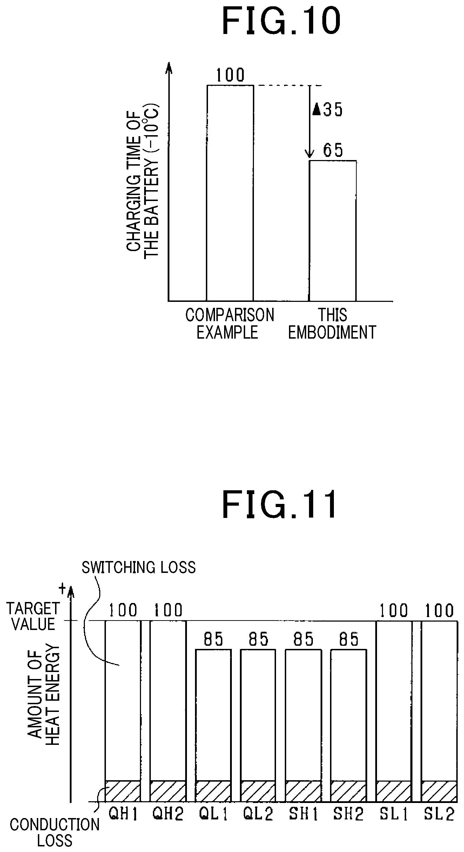

Specifically, figure 10 shows an example of comparing the charging time of the battery13 between the comparison example and this embodiment in a situation where the ambient temperature of power conversion device14 is -10°C. In the comparison example, the temperature increasing operation of this embodiment is not performed, and the battery 13 is charged while the temperature of the battery 13 remains low. On the other hand, in this embodiment, the temperature of the battery 13 is increased by the temperature increasing operation, and then the battery 13 is charged. In this case, the battery 13 is charged after the power that can be input/output to/-from the battery 13 is increased, so the battery 13 charging time can be reduced by 35% compared to the comparative example.

The power conversion device 14 includes both the function of charging the battery 13 and the function of increasing the temperature of the battery 13. Therefore, the power conversion device 14 used to charge the battery 13 can be utilized to perform the temperature increasing operation to raise the temperature of the battery 13.

By turning on and off each of the switches QH1, QH2, QL1, and QL2 of the first power conversion unit 30 and each of the switches SH1, SH2, SL1, and SL2 of the second power conversion unit 40, voltage increasing operation and voltage decreasing operation are performed. In this case, current circulates between the first power conversion unit 30 and the second power conversion unit 40. As a result, the switching and conduction losses that occur in each of the switches QH1, QH2, QL1, QL2, SH1, SH2, SL1, and SL2 is converted into heat energy.

Specifically, figure 11 shows the amount of heat energy generated by the temperature increasing operation for each of the switches QH1, QH2, QL1, QL2, SH1, SH2, SL1, and SL2. In figure 11, the amount of heat energy is shown as a percentage of a target value. The target value is the amount of heat energy required to raise the temperature of battery 13. The target value is set based on thermal characteristics such as the allowable power dissipation and operating temperature range of each of the switches QH1, QH2, QL1, QL2, SH1, SH2, SL1, and SL2.

The temperature increasing operation generates the same amount of heat energy and near the target value at each of the switches QH1, QH2, QL1, QL2, SH1, SH2, SL1, and SL2. The heat energy generated at each of the switches QH1, QH2, QL1, QL2, SH1, SH2, SL1, and SL2 is transferred to the battery 13 through the heat conveying unit 15. This allows the temperature of battery 13 to increase. Figure 11 shows just one example of the operation, and the amount of heat energy generated at each of the switches QH1, QH2, QL1, QL2, SH1, SH2, SL1, and SL2 can vary in various ways depending on the operating conditions.

The switching frequency fsw is set differently for the first power conversion unit 30 and the second power conversion unit 40 when only one of the voltage increasing operation or the voltage decreasing operation is performed and when the temperature increasing operation is performed. In detail, when only one of the voltage increasing operation and one of the voltage decreasing operation is performed in the first power conversion unit 30 and the second power conversion unit 40, the switching frequency fsw of the first power conversion unit 30 and the second power conversion unit 40 is set to the resonance frequency fr of the first resonator 33 and the second resonator 43. This improves the ratio of output power to input power compared to the case where the switching frequency fsw is set to a frequency other than the resonant frequency fr. On the other hand, when the temperature increasing operation is performed, the switching frequency fsw of the first power conversion unit 30 and the second power conversion unit 40 is set to a value deviating from the resonance frequency fr of the first resonator 33 and second resonator 43. This allows the switching losses generated by turning on and off each of the switches QH1, QH2, QL1, QL2, SH1, SH2, SL1, and SL2, to be increased compared to when the switching frequency fsw is set to the resonant frequency fr. As a result, the efficiency of converting the input power into heat energy can be improved.

When temperature increasing operation is performed, the switching frequency fsw of the first power conversion unit 30 and the second power conversion unit 40 is higher than the resonance frequency fr of the first resonator 33 and the second resonator 43. In this case, the switching frequency fsw of the first power conversion unit 30 and the second power conversion unit 40 is set to a value in the inductive range, so that the current IQ flowing in the first resonator 33 and the current IS flowing in the second resonator 43 are controlled. As a result, even in situations where various values are set for the voltages between the terminals VL and VH, either one of the first power conversion unit 30 or the second power conversion unit 40 can be accurately operated as the voltage increasing operation unit and the other as the voltage decreasing operation unit. As a result, temperature increasing operation can be accurately performed.

During the temperature increasing operation, the period of the Mode 2 and the Mode 4 are set based on the voltage between the terminals VL of the low voltage terminals TL1 and TL2, and the voltage between the terminals VH of the high voltage terminals TH1 and TH2. The period of the Mode 2 and the Mode 4 are set based on the voltage between the terminals VL of the low voltage terminals TL1 and TL2 and the voltage between the terminals VH of the high voltage terminals TH1 and TH2. As a result, the voltage between the terminals VL of the low voltage terminals TL1 and TL2, VL, and the voltage between the terminals VH of the high voltage terminals TH1 and TH2, can be controlled while performing the temperature increasing operation. As a result, overvoltage and undervoltage conditions can be suppressed from occurring during the temperature increasing operation.

<Second Embodiment>

The following is a description of the second embodiment. It is explained focusing on the differences from the first embodiment.

When the temperature increasing operation is performed, current may flow through stray capacitance between power conversion device 14 and a ground. The ground is a wiring path that is low potential, e.g., body ground, which is composed of the metal body frame of vehicle 10. The current flowing through the stray capacitance is a noise current that flows into or out of the power conversion device 14, and the noise current is desired to be below the regulation value.

In this respect, in this embodiment, one of the first power conversion unit 30 and the second power conversion unit 40 can operate as the voltage increasing operation unit, and the other can be operated as the voltage decreasing operation unit. The control device 24 synchronizes the voltage increasing operation of the power conversion unit that operates as the voltage increasing operation unit and the voltage decreasing operation of the power conversion unit that operates as the voltage decreasing operation unit in the temperature increasing operation.

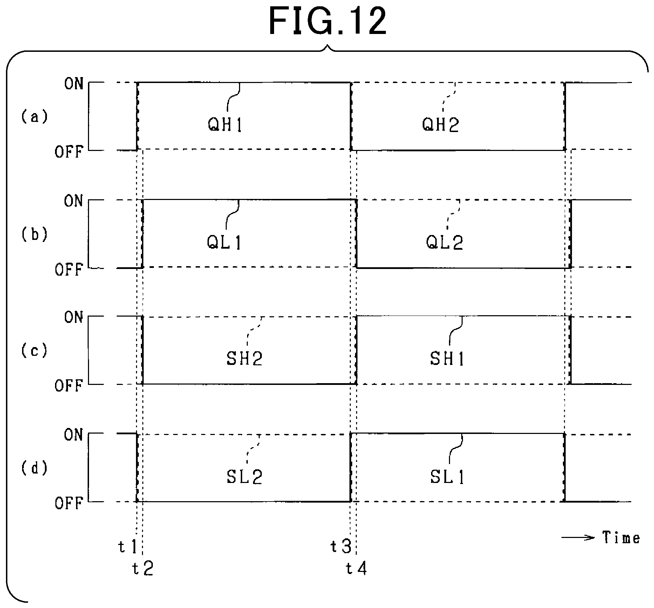

Specifically, figure 12 will be used to explain this. Figure 12 shows an example of control when the voltage decreasing operation in the first power conversion unit 30 and the voltage increasing operation in the second power conversion unit 40 are synchronized. Parts (a) to (d) in Figure 12 correspond to parts (a) to (d) in figure 7 respectively.

The upper switch QH1 in the first upper arm 31 and the lower switch SL2 in the second lower arm 42 are synchronized to be on and off respectively, and the lower switch QH2 in the first upper arm 31 and the upper switch SL1 in the second lower arm 42 are synchronized to be on and off respectively. The upper switch QL1 in the first lower arm 32 and the lower switch SH2 in the second upper arm 42 are synchronized to be on and off respectively, and the lower switch QL2 in the first lower arm 32 and the upper switch SH1 in the second upper arm 42 are synchronized to be on and off respectively.

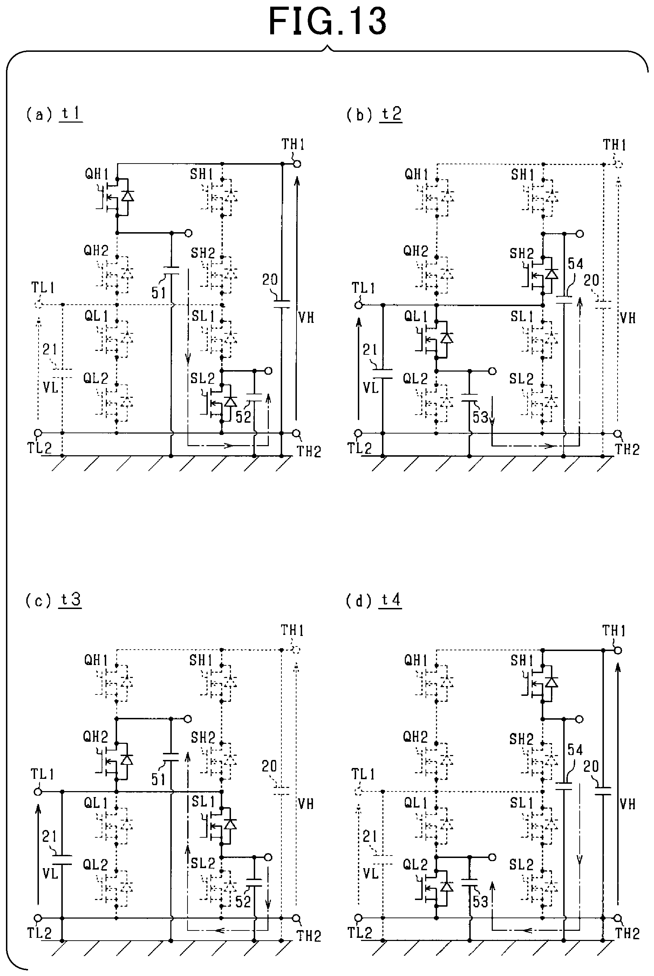

Noise currents are generated at the timing when each of the switches QH1, QH2, QL1, QL2, SH1, SH2, SL1, and SL2 is turned on and off. The current paths flowing to the power conversion device 14 and the ground at the first to fourth timings t1 to t4, which are the timings when noise currents are generated, are shown in the (a) to (d) parts of figure 13.

At the first timing t1, the upper switch QH1 in the first upper arm 31 and the lower switch SL2 in the second lower arm 42 are turned on, and the lower switch QH2 in the first upper arm 31 and the upper switch SL1 is turned off, the switches QL1 and QL2 in the first lower arm 32 and the switches SH1 and SH2 in the second upper arm 41 are not switched on or off.

In this case, the first outflow current ia1 flows in a stray capacitance 51 between the connection point of the source of the upper switch QH1 and the drain of the lower switch QH2 in the first upper arm 31 and the ground. The first outflow current ia1 is the current flowing in the direction from the power conversion device 14 to the ground, and its magnitude is expressed by the following equation (e1).

[Math 1]

$$ia1 = CH1 \times \frac{d(VH - VL)}{dt} \quad ... \quad (e1)$$

CH1 is the capacitance value of the stray capacitance 51 between the connection point of the source of the upper switch QH1 and the drain of the lower switch QH2 in the first upper arm 31 and the ground.

The first inflow current ib1 flows in a capacitance 52 between the connection point of the source of the upper switch SL1 and the drain of the lower switch SL2 in the second lower arm 42 and the ground. The first inflow current ib1 is the current flowing in the direction from the ground to the power conversion device 14, and its magnitude is expressed by the following equation (e2).
[Math 2]

$$ib1 = CL2 \times \frac{dVL}{dt} \quad ... \quad (e2)$$

CL2 is the capacitance value of the stray capacitance 52 between the connection point of the source of the upper switch SL1 and the drain of the lower switch SL2 in the second lower arm 42 and the ground. The first outflow current ia1 and the first inflow current ib1 are currents that flow in opposite directions to each other and circulate between the first power conversion unit 30 and the second power conversion unit 40 through the ground. In this case, the difference between the magnitude of the first outflow current ia1 and the magnitude of the first inflow current ib1 is the noise current because the current flowing out from the power conversion device 14 to the ground and the current flowing in from the ground to power conversion device 14 are offset.

The respective magnitudes of the currents ia1 and ib1is the product of the capacitance values CH1 and CL2 of the respective floating capacitance 51 and 52 and the change in the voltage applied to the respective floating capacitance 51 and 52, from the above equations (e1) and (e2). Therefore, assuming that the capacitance values CH1 of the stray capacitance 51 and the capacitance CL2 of the stray capacitance 52 are equal, the magnitude of the noise current is the product of the change in voltage caused by turning on and off the switches QH1 and QH2 in the first upper arm 31 and the switches SL1 and SL2 in the second lower arm 42. The larger the difference between the amount of voltage change caused by the switching on and off of the switches QH1 and QH2 in the first upper arm31 and the switches SL1 and SL2 in the second lower arm 42, the larger the voltage change.

At the second timing t2, the upper switch QL1 in the first lower arm 32 and the lower switch SH2 in the second upper arm 41 are turned on, and the lower switch QL2 in the first lower arm 32 and upper switch SH1 in the second upper arm Each of switches QH1 and QH2 in first upper arm 31 and switches SL1 and SL2 in second lower arm 42 are not switched on or off.

In this case, the second outflow current ia2 flows in the stray capacitance 53 between the connection point of the source of upper switch QL1 and the drain of lower switch QL2 in the first lower arm 32 and the ground. The second outflow current ia2 is the current flowing in the direction from power conversion device 14 to the ground, and its magnitude is expressed by the following equation (e3).
[Math 3]

$$ia2 = CL1 \times \frac{dVL}{dt} \quad ... \quad (e3)$$

CL1 is the capacitance value of the stray capacitance 53 between the connection point of the source of upper switch QL1 and the drain of the lower switch QL2 in the first lower arm 32 and the ground.

The second inflow current ib2 flows in the stray capacitance 54 between the connection point of the source of the upper switch SH1 and the drain of the lower switch SH2 in the second upper arm 41 and the ground. The second inflow current ib2 is the current flowing from the ground to the power conversion device 14, and its magnitude is expressed by the following equation (e4).
[Math 4]

$$ib2 = CH2 \times \frac{d(VH - VL)}{dt} \quad ... \quad (e4)$$

CH2 is the capacitance value of a stray capacitance 54 between the connection point of the source of the upper switch SH1 and the drain of the lower switch SH2 in the second upper arm 41 and the ground. The second outflow current ia2 and the second inflow current ib2 are currents that flow in opposite directions to each other and circulate between the first power conversion unit 30 and the second power conversion unit 40 through the ground. In this case, the difference between the magnitude of the second outflow current ia2 and the magnitude of the second inflow current ib2 is the noise current because the current flowing out from the power conversion device 14 to the ground and the current flowing in from the ground to power conversion device 14 are offset

The magnitude of the respective current ia2, ib2 is the product of the capacitance values CL1, CH2 of the respective each stray capacitance 53, 54 and the respective change in the voltage applied to the respective stray capacitance 53, 54, according to equations (e3) and (e4) above. Therefore, assuming that the capacitance values CL1 and CH2 of the respective stray capacitances 53 and 54 are equal, the magnitude of the noise current is the product of the change in voltage caused by turning on and off each of the switches QL1 and QL2 in the first lower arm 32 and each of the switches SH1 and SH2 in the second upper arm 41. The larger the difference between the amount of voltage change by turning on and off each of the switches QL1 and QL2 of the first lower arm 32 and each of the switches SH1 and SH2 in the second upper arm 41, the larger the noise current increases.

At third timing t3, the lower switch QH2 in the first upper arm31 and the upper switch SL1 in the second lower arm 42 are turned on, and the upper switch QH1 in the first upper arm31 and the lower switch SL2 in the second lower arm are turned off. Each of the switches QL1 and QL2 of first lower arm 32 and each of the switches SH1 and SH2 in the second upper arm 41 are not switched on or off.

In this case, the third inflow current ib3 flows in the stray capacitance 51 between the connection point of the source of the upper switch QH1 and the drain of the lower switch QH2 in the first upper arm 31 and the ground. The third inflow current ib3 flows from the ground to the power conversion device 14, and its magnitude is the same as the first outflow current ia1. Therefore, the magnitude of the third inflow current ib3 is expressed by the right side of the above equation (e1).

The third outflow current ia3 flows in the stray capacitance 52 between the connection point of the source of the upper switch SL1 and the drain of the lower switch SL2 in the second lower arm 42 and the ground. The third outflow current ia3 flows from the power conversion device14 to the ground, and its magnitude is the same as the first inflow current ib1. Therefore, the magnitude of the third outflow current ia3 is expressed by the right side of the above equation (e2).

The third outflow current ia3 and the third inflow current ib3 are currents flowing in opposite directions to each other and circulate between the first power conversion unit 30 and the second power conversion unit 40 through the ground. In this case, the current flowing out from the power conversion device 14 to the ground and the current flowing in from the ground to the power conversion device 14 cancel each other out, so as in the case of timing t1, the magnitude of the third outflow current ia3 and the third noise current is generated according to the difference between the magnitude of the third outflow current ia3 and the magnitude of the third inflow current ib3.

At fourth timing t4, the lower switch QL2 in the first lower arm 32 and the upper switch SH1 in the second upper arm 41 are turned on, and the upper switch QL1 in the first lower arm 32 and the lower switch SH2 in the second upper arm 41 are turned off. Each of the switches QH1 and QH2 in the first upper arm31 and the switches SL1 and SL2 in the second lower arm 42 are not switched on or off.

In this case, the fourth inflow current ib4 flows in the stray capacitance 53 between the connection point of the source of the upper switch QL1 and the drain of the lower switch QL2 in the first lower arm 32 and the ground. The fourth inflow current ib4 flows from the ground to the power conversion device14, and its magnitude is the same as the second outflow current ia2. Therefore, the magnitude of the fourth inflow current ib4 is expressed by the right side of the above equation (e3).

The fourth outflow current ia4 flows in the stray capacitance 54 between the connection point of the source of the upper switch SH1 and the drain of the lower switch SH2 in the second upper arm 41 and the ground. The fourth outflow current ia4 flows conversion device 14 to the ground, and its magnitude is the same as the second inflow current ib2. Therefore, the magnitude of the fourth outflow current ia4 is expressed by the right side of the above equation (e4).

The fourth outflow current ia4 and the fourth inflow current ib4 are currents flowing in opposite directions to each other and circulate between the first power conversion unit 30 and the second power conversion unit 40 through the ground. In this case, the current flowing out from power conversion device 14 to the ground and the current flowing in from the ground to power conversion device 14 cancel each other out, so that, as in the case of the second timing t2, the magnitude of the fourth outflow current ia4 and the noise current is generated according to the difference between the magnitude of the fourth outflow current ia4 and the magnitude of the fourth inflow current ib4.

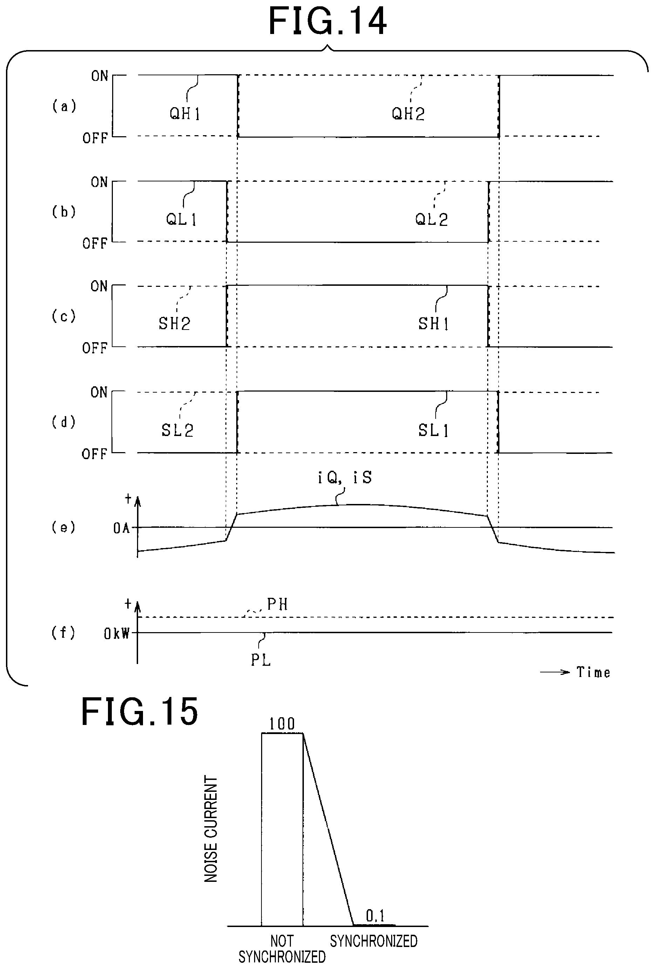

Figure 14 shows an example of a temperature increasing operation in which the voltage increasing operation is performed in the first power conversion unit 30 and the voltage decreasing operation is performed in the second power conversion unit 40. Parts (a) to (f) of figure 14 correspond to parts (a) to (f) of figure 7 respectively. In part (e) of figure 14, the voltage increasing operation in the first power conversion unit 30 and the voltage decreasing operation in the second power conversion unit 40 are synchronized. The current iQ flowing in the first resonator 33 and the current iS flowing in the second resonator 43 overlap because the voltage increasing operation in the first power conversion unit 30 and the voltage decreasing operation in the second power conversion unit 40 are synchronized.

In this embodiment, as in the case described in figure 7, the temperature of battery 13 increases while the change of the voltage between the terminals VL of the low voltage terminals TL1 and TL2 and the voltage between the terminals VH of the high voltage terminals TH1 and TH2 is suppressed during the temperature increasing operation. In addition, the noise current generated during the temperature increasing operation is reduced.

Specifically, figure 15 shows the comparison of magnitudes of the noise currents, when the voltage between the terminals VH of the high voltage terminals TH1 and TH2 is twice the voltage between the terminals VL of the low voltage terminals TL1 and TL2, between the case that the voltage increasing operation and the voltage decreasing operation are not synchronized and the case that the voltage increasing operation and the voltage decreasing operation are synchronized.

When the voltage between the terminals VH of the high voltage terminals TH1 and TH2 is twice the voltage between the terminals VL of the low voltage terminals TL1 and TL2, the magnitude of the first outflow current ia1 is $CH1 \times dVL/dt$ from the above equation (e1).

On the other hand, the magnitude of the first inflow current ib1 is CL2 × dVL/dt from the above formula (e2). Assuming a situation where the capacitance value CH1 of the stray capacitance 51 and the capacitance value CL2 of the stray capacitance 52 are the same, the magnitude of the first outflow current ia1 and the magnitude of the first inflow current ib1 will be the same, so that almost no noise current occurs.

As shown in figure 15, in this embodiment where the voltage increasing operation and the voltage decreasing operation are synchronized, the magnitude of the noise current is reduced by a factor of 1/1000 compared to the case where the voltage increasing and decreasing operations are not synchronized. Therefore, the generation of noise current can be suppressed while performing the same temperature increasing operation as in the first embodiment.

The effect of suppressing the generation of noise current shown in figure 15 can vary depending on the voltage between the terminals VH of the high voltage terminals TH1 and TH2 and the voltage between the terminals VL of the low voltage terminals TL1 and TL2. Specifically, when the voltage between the terminals VH of the high voltage terminals TH1 and TH2 is not twice the voltage between the terminals VL of the low voltage terminals TL1 and TL2, and the voltage increasing operation and the voltage decreasing operation are synchronized, the noise current increases.

<Third Embodiment>

The following is a description of the third embodiment. It is explained focusing on the differences from the second embodiment.

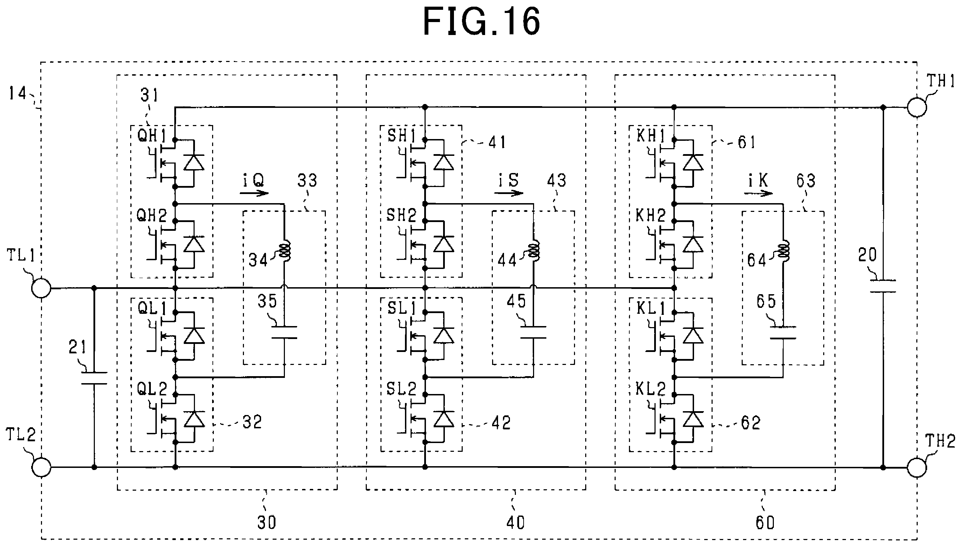

In this embodiment, as shown in figure 16, the power conversion device 14 includes a third power conversion unit 60 in addition to the first power conversion unit 30 and the second power conversion unit 40. In figure 16, the control device 24 is omitted from the figure, and the same configuration as shown in Figure 2 is indicated with the same symbol.

The third power conversion unit 60 includes a third upper arm 61, a third lower arm 62 and a third resonator 63. Each of the third upper arm 61 and the third lower arm 62 is a series connection of voltage-controlled semiconductor switches. The third resonator 63 is a series connection of a third reactor 64 and a third capacitor 65. In this embodiment, the semiconductor switches in each of the third upper arm 61 and the third lower arm 62 are N-channel switches including body diodes.

The drain of an upper switch KH1 in the third upper arm 61 is connected to the first high voltage terminal TH1, and the source of the upper switch KH1 in the third upper arm 61 is connected to the drain of a lower switch KH2 in the third upper arm 61. The source of the lower switch KH2 of the third upper arm 61 is connected to the first low voltage terminal TL1 and the drain of the upper switch KL1 in the third lower arm 62. The drain of a lower switch KL2 in the third lower arm 62 is connected to the source of the upper switch KL1 in the third lower arm 62, and the source of the lower switch KL2 in the third lower arm 62 is connected to the second high voltage the second high voltage terminal TH2 and the second low voltage terminal TL2. The first side of the third reactor 64 is connected to the connection point between the source of the upper switch KH1 and the drain of the lower switch KH2 in the third upper arm 61. The second side of the third reactor 64 is connected to the first side of third capacitor 65. The second side of third capacitor 65 is connected to the connection point between the source of the switch KL1 and the drain of lower switch KL2 in the third lower arm 62.

In this embodiment, the upper switch KH1 in the third upper arm 61 corresponds to "first upper arm switches" and the lower switch KH2 in the third upper arm 61 corresponds to "second upper arm lower switches". The upper switch KL1 in the third lower arm 62 corresponds to "first lower arm switches" and the lower switch KL2 in the third lower arm 62 corresponds to "second lower arm switches".

As in the case of the first power conversion unit 30, the control device 24 turns on and off each of the switches KH1, KH2, KL1, and KL2 of the third power conversion unit 60 to set the third power conversion unit 60 to one of the Mode 1 ~ the mode 4. The control device 24, by causing the third power conversion unit 60 to repeat one cycle of processing consisting of the Mode 1 to the Mode 4, causes the third power conversion unit 60 to operate as one of the voltage increasing operation unit and the voltage decreasing operation unit.

For example, it is considered that the temperature increasing operation is performed to synchronize the voltage increasing operation of the first power conversion unit 30 and the voltage decreasing operation of the second power conversion unit 40, as well as the second embodiment. In this case, the question is how to control the remaining third power conversion unit 60 third power conversion units in the temperature increasing operation. In the embodiment, the control device 24 stops the operation of the 60 third power conversion units while the temperature increasing operation is performed. This can suppress the generation of noise current due to the operation of the third power conversion unit 60.

<Variant of Third Embodiment>

Instead of stopping the operation of the third power conversion unit 60 in the temperature increasing operation, the control device 24 may operate the third power conversion unit 60 as either one of the voltage increasing operation unit and the voltage decreasing operation unit. In this case, the control device 24 may determine whether the third power conversion unit 60 is to perform as the voltage increasing operation unit or the voltage decreasing operation unit based on the voltage between the terminals VL of the low voltage terminals TL1 and TL2 and the voltage between the terminals VH of the high voltage terminals TH1 and TH2.

This section, how to determine which of the voltage increasing operation unit and voltage decreasing operation unit the third power conversion unit 60 should operate based on the concept described in figure 9 is explained. When the control device 24 determines that the voltage between the terminals VL of the low voltage terminals TL1 and TL2 is equal to or greater than the first threshold Va, the third power conversion unit 60 may be operated as the voltage increasing operation unit. As a result, the voltage between the terminals VL of the low voltage terminals TL1 and TL2 decreases. When the control device 24 determines that the voltage between the terminals VL of the low voltage terminals TL1 and TL2 is equal to or less than the second threshold Vb, the third power conversion unit 60 may be operated as the voltage decreasing operation unit. As a result, the voltage between the terminals VL of the low voltage terminals TL1 and TL2 increases.

When the control device 24 determines that the voltage VH between the terminals of the high voltage terminals TH1 and TH2 is equal to or greater than the third threshold Vc, the third power conversion unit 60 may be operated as a voltage decreasing operation If the voltage between the terminals VH of the high voltage terminals TH1 and TH2 is determined to be equal to or greater than the third threshold Vc, the third power conversion unit 60 may be operated as a voltage decreasing operation unit. As a result, the voltage VH between the terminals of the high voltage terminals TH1 and TH2 is lowered. If the control device 24 determines that the voltage VH between the terminals of the high voltage terminals TH1 and TH2 is equal to or less than the fourth threshold Vd, the third power conversion unit 60 may be operated as a voltage increasing If the voltage VH between terminals TH1 and TH2 is determined to be equal to or less than the fourth threshold Vd, the third power conversion unit 60 may be operated as a voltage increasing operation unit. As a result, the voltage between the terminals VH of the high voltage terminals TH1 and TH2 increases.

According to this embodiment, the third power conversion unit 60, which is not synchronized with the operation of the first power conversion unit 30 and the second power conversion unit 40 in the temperature increasing operation, can be used to control the voltage between terminals VL of the low voltage terminals TL1 and TL2 and the voltage between terminals VH of the high voltage terminals TH1 and TH2. As a result, overvoltage and undervoltage conditions can be suppressed during temperature increasing operation.

<Fourth Embodiment>

The following is a description of the fourth embodiment. It is explained focusing on its differences from the third embodiment.

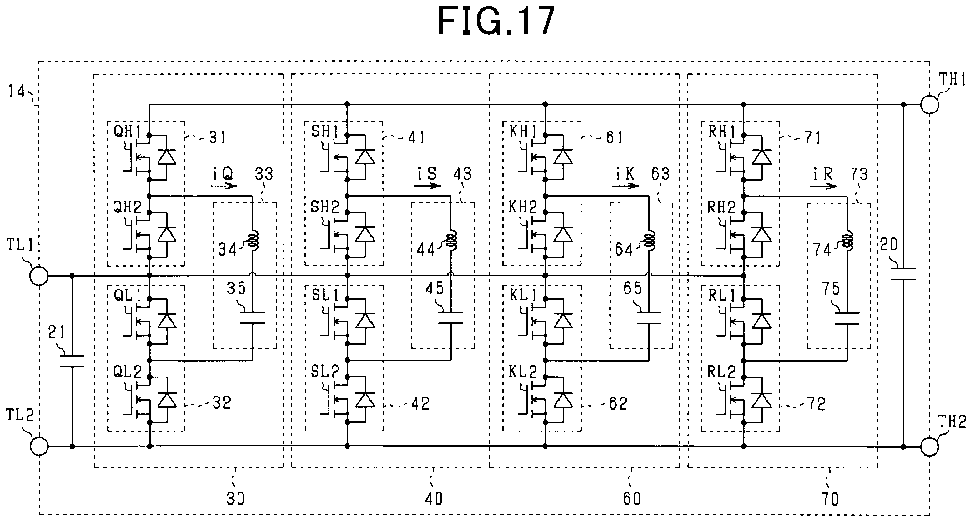

In this embodiment, as shown in figure 17, power conversion device 14 includes a a fourth power conversion unit 70 in addition to the first power conversion unit 30, the second power conversion unit 40 and the third power conversion power conversion unit 60. In figure 17, the control device 24 is omitted from the figure, and the same configuration as shown in Figure 16 is indicated with the same symbol.

The fourth power conversion unit 70 includes a fourth upper arm 71, a fourth lower arm 72, and a fourth resonator 73. The fourth resonator73 is a series connection of a fourth reactor 74 and a fourth capacitor 75. In this embodiment, the semiconductor switches in the fourth upper arm 71 and the fourth lower arm 72 are N-channel MOSFETs with body diodes.

The drain of an upper switch RH1 in the fourth upper arm 71 is connected to the first high voltage terminal TH1 and the source of the upper switch RH1 in the fourth upper arm 71 is connected to the drain of a lower switch RH2 in the fourth upper arm 71. The source of the lower switch RH2 in the fourth upper arm 71 is connected to the first low voltage terminal TL1 and the drain of an upper switch RL1 in the fourth lower arm 72. The drain of the lower switch RL2 in the fourth lower arm 72 is connected to the source of the upper switch RL1 in the fourth lower arm 72, and the source of a lower switch RL2 in the fourth lower arm 72 is connected to the second high voltage terminal TH2 and the second low voltage terminal TL2. The first side of the fourth reactor 74 is connected to the connection point of the source of upper switch RH1 and the drain of the lower switch RH2 in the fourth upper arm 71. The second side of the fourth reactor 74 is connected to the first side of the fourth capacitor 75. The second side of fourth capacitor 75 is connected to the connection point of the source of the upper switch RL1 and the drain of the lower switch RL2 in the fourth lower arm 72.

In this embodiment, the upper switch RH1 in the fourth upper arm 71 corresponds to "first upper arm switches" and the lower switch RH2 in the fourth upper arm 71 corresponds to "second upper arm lower switches". The upper switch RL1 in the fourth lower arm 72 corresponds to "first lower arm switches" and the lower switch RL2 in the fourth lower arm 72 corresponds to "second lower arm switches".

As in the case of the first power conversion unit 30, the control device 24 turns on and off each of the switches RH1, RH2, RL1, and RL2 in the fourth power conversion unit 70 to set the fourth power conversion unit 70 to one of the Mode 1 ~ Mode 4. The control device 24, by causing the fourth power conversion unit 70 to repeat one cycle of processing consisting of the Mode 1 ~ Mode 4, causes the fourth power conversion unit 70 to operate as one of the voltage increasing operation unit and the voltage decreasing operation unit.

As described in figure 15 for the effect of suppressing noise current generation, when the operation of the power conversion unit in which the voltage increasing operation is performed is synchronized with the operation of the power conversion unit in which the voltage decreasing operation is performed, the noise current may increase. current may increase. Therefore, there is still room for improvement in reducing noise current during temperature increasing operation.

In this embodiment, any two of the first power conversion unit 30 and the second power conversion units 40, the third conversion unit 60, and the fourth power conversion unit 70 can operate as the voltage increasing operation unit and the other two can be operated as voltage decreasing operation units. Therefore, in the temperature increasing operation, the control device 24, instead of synchronizing the operation of the power conversion unit in which the voltage increasing operation is performed with the operation of the power conversion unit in which the voltage decreasing operation is performed, synchronizes the operation of two of the power conversion unit in which the voltage increasing operation is performed, and synchronizes the operation of two of the power conversion unit in which the voltage decreasing operation is performed. For example, the control device 24 synchronizes the operation of the third power conversion unit 60 and the fourth power conversion units 70 in which the voltage increasing operation is performed and synchronizes the operation of the first power conversion unit 30 and the second power conversion unit 40 in which the voltage decreasing operation is performed.

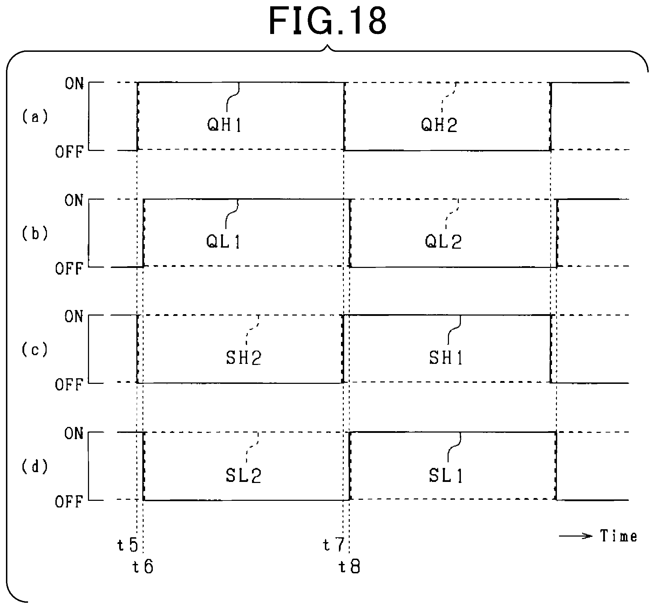

Figure 18 shows an example of the operation of the first power conversion unit 30 and the second power conversion unit 40 in which the voltage decreasing operation is performed. Parts (a) to (d) of figure 18 correspond to parts (a) to (d) in Figure 7 respectively.

The upper switch QH1 in the first upper arm 31 and the lower switch SH2 in the second upper arm 41 are synchronized to be turned on and off, and the lower switch QH2 in the first upper arm 31 and the upper switch SH1 in the second upper arm 41 are synchronized to be turned on and off. The upper switch QL1 in the first lower arm 32 and the lower switch SL2 in the second lower arm 42 are synchronized to be turned on and off, and the lower switch QL2 in the second lower arm 42 and the upper switch SL1 in the second lower arm 42 are synchronized to be turned on and off.

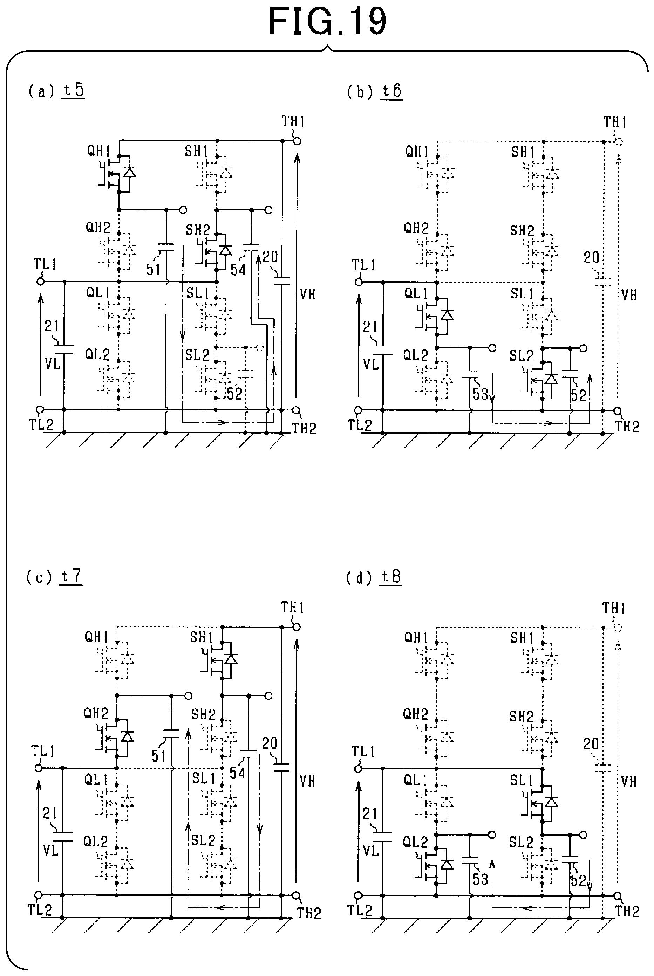

Parts (a) to (d) of figure 19 show the current paths flowing to the power conversion device 14 and ground at the fifth to eighth timings t5 to t8, which are the timings when noise currents are generated. The same configuration as shown in figure 13 is marked with the same symbol.

At the fifth timing t5, the upper switch QH1 in the first upper arm 31 and the lower switch SH2 in the second upper arm 41 are turned on, and the lower switch QH2 in the first upper arm 31 and the upper switch SH1 is turned off. Each of the switches QL1 and QL2 of first lower arm 32 and the switches SL1 and SL2 in the second lower arm 42 are not switched on or off.

In this case, the fifth outflow current ia5 flows in a stray capacitance 51 between the connection point of the source of the upper switch QH1 and the drain of the lower switch QH2 in the first upper arm 31 and the ground. The fifth outflow current ia5 is the current flowing in the direction from the power conversion device 14 to the ground, and its magnitude is the same as the first outflow current ia1. For example, the magnitude of the fifth outflow current ia5 is expressed by the right side of the above equation (e1).

The fifth inflow current ib5 flows in a stray capacitance 54 between the connection point of the source of upper switch SH1 and the drain of lower switch SH2 in the second upper arm 41 and the ground. The fifth inflow current ib5 flows in the direction from the ground to the power conversion device 14, and its magnitude is the same as the second inflow current ib2. For example, the magnitude of the fifth inflow current ib5 may be represented by the right side of the above equation (e4).

The fifth outflow current ia5 and the fifth inflow current ib5 are currents that flow in opposite directions to each other and circulate between the first power conversion unit 30 and the second power conversion unit 40 through the ground. In this case, the difference between the magnitude of the fifth outflow current ia5 and the magnitude of the fifth inflow current ib5 is the noise current because the current flowing out from the power conversion device 14 to the ground and the current flowing in from ground to the power conversion device 14 are offset. Assuming that the capacitance value CH1 of the stray capacitance 51 and the capacitance value CH2 of the stray capacitance 54 are equal, the magnitude of the fifth outflow current ia5 and the magnitude of the fifth inflow current ib5 are the same regardless of the value of each inter-terminal voltage VH and VL. This means that the difference between the magnitude of the fifth outflow current ia5 and the magnitude of the fifth inflow current ib5 is precisely reduced compared to second embodiment, and the noise current can be precisely reduced.

At the sixth timing t6, the upper switch QL1 in the first lower arm 32 and the lower switch SL2 in the second lower arm 42 are turned on, and the lower switch QL2 in the first lower arm 32 and the upper switch SL1 is turned off. Each of the switches QH1 and QH2 in the first upper arm31 and switches SH1 and SH2 in the second upper arm 41 are not switched on or off.

In this case, the sixth outflow current ia6 flows in a stray capacitance 53 between the connection point of the source of the upper switch QL1 and the drain of the lower switch QL2 in the first lower arm 32 and the ground. The sixth outflow current ia6 is the current flowing in the direction from the power conversion device 14 to the ground, and its magnitude is the same as the second outflow current ia2. For example, the magnitude of the sixth outflow current ia6 may be expressed by the right side of the above equation (e3).

The sixth inflow current ib6 flows in a stray capacitance 52 between the connection point of the source of upper switch SL1 and the drain of the lower switch SL2 in the second lower arm 42 and the ground. The sixth inflow current ib6 flows in the direction from the ground to the power conversion device 14, and its magnitude is the same as the first inflow current ib1. For example, the magnitude of the sixth inflow current ib6 may be represented by the right side of the above equation (e2).

The sixth outflow current ia6 and the sixth inflow current ib6 are currents flowing in opposite directions to each other and circulate between the first power conversion unit 30 and the second power conversion unit 40 through the ground. In this case, the difference between the magnitude of the sixth outflow current ia6 and the magnitude of the sixth inflow current ib6 is the noise current because the current flowing out from the power conversion device 14 to the ground and the current flowing in from the ground to power conversion device 14 are offset. Assuming that the capacitance values CL2 and CL1 of each of the stray capacitances 52 and 53 are equal, the magnitude of the sixth outflow current ia6 and the magnitude of the sixth inflow current ib6 are the same regardless of the value of each the inter-terminal voltage VH and VL. As a result, the difference between the magnitude of the sixth outflow current ia6 and the magnitude of the sixth inflow current ib6 is precisely reduced compared to the second embodiment, and the noise current can be precisely reduced.

At the seventh timing t7, the lower switch QH2 in the first upper arm 31 and the upper switch SH1 in the second upper arm 41 are turned on, and the upper switch QH1 in the first upper arm 31 and each of the switches QL1 and QL2 in the first lower arm 32 and the switches SL1 and SL2 in the second lower arm 42 are not switched on or off.

In this case, the seventh inflow current ib7 flows in the stray capacitance 51 between the connection point of the source of upper switch QH1 and the drain of lower switch QH2 in the first upper arm 31 and the ground. The seventh inflow current ib7 is the current flowing in the direction from the ground to the power conversion device 14, and its magnitude is the same as the first outflow current ia1. For example, the magnitude of the seventh inflow current ib7 may be represented by the right side of the above equation (e1).

The seventh outflow current ia7 flows in the stray capacitance 54 between the connection point of the source of the upper switch SH1 and the drain of the lower switch SH2 in the second upper arm 41 and the ground. The seventh outflow current ia7 is the current flowing in the direction from the power conversion device 14 to the ground, and its magnitude is the same as the second inflow current ib2. For example, the magnitude of the seventh outflow current ia7 is represented by the right side of the above equation (e4).

The seventh outflow current ia7 and the seventh inflow current ib7 are currents that flow in opposite directions to each other and circulate between the first power conversion unit 30 and the second power conversion unit 40 through the ground. In this case, the difference between the magnitude of the seventh outflow current ia7 and the magnitude of the seventh inflow current ib7 is the noise current because the current flowing out from power conversion device 14 to ground and the current flowing in from ground to power conversion device 14 are offset. Assuming that the capacitance values CH1 and CH2 of each of the stray capacitances 51 and 54 are equal, the magnitude of the seventh outflow current ia7 and the magnitude of the seventh inflow current ib7 are the same regardless of the value of each of the inter-terminal voltage VH and VL. This means that the difference between the magnitude of the seventh outflow current ia7 and the magnitude of the seventh inflow current ib7 is precisely reduced compared to second embodiment, and the noise current can be precisely reduced.

At the eighth timing t8, the lower switch QL2 in the first lower arm 32 and the upper switch SL1 in the second lower arm 42 are turned on, and the upper switch QL1 in the first lower arm 32 and each of the switches QH1 and QH2 in the first upper arm 31 and the switches SH1 and SH2 in the second upper arm 41 are not switched on or off.

In this case, the eighth inflow current ib8 flows in the stray capacitance 53 between the connection point of the source of the upper switch QL1 and the drain of the lower switch QL2 in the first lower arm 32 and the ground. The eighth inflow current ib8 is a current flowing in the direction from the ground to the power conversion device 14, and its magnitude is the same as the second outflow current ia2. For example, the magnitude of the eighth inflow current ib8 is represented by the right side of the above equation (e3).

The eighth outflow current ia8 flows in the stray capacitance 52 between the connection point of the source of the upper switch SL1 and the drain of the lower switch SL2 in the second lower arm 42 and the ground. The eighth outflow current ia8 is the current flowing in the direction from the power conversion device 14 to the ground, and its magnitude is the same as the first inflow current ib1. For example, the magnitude of the eighth outflow current ia8 is represented by the right side of the above equation (e2).

The eighth outflow current ia8 and the eighth inflow current ib8 are currents that flow in opposite directions to each other and circulate between the first power conversion unit 30 and the second power conversion unit 40 through the ground. In this case, the difference between the magnitude of the eighth outflow current ia8 and the magnitude of the eighth inflow current ib8 is the noise current because the current flowing out from the power conversion device 14 to the ground and the current flowing in from the ground to the power conversion device 14 are offset. Assuming that the capacitance values CL2 and CL1 of each of the stray capacitances 52 and 53 are equal, the magnitude of the eighth outflow current ia8 and the eighth inflow current ib8 will be the same regardless of the value of each inter-terminal voltage VH and VL. This means that the difference between the magnitude of the eighth outflow current ia8 and the magnitude of the eighth inflow current ib8 is reliably reduced compared to second embodiment, and the noise current can be reliably reduced.

The control device 24 synchronizes the operation of the first power conversion unit 30 and the second power conversion unit 40, which perform the voltage decreasing operation, as well as the third power conversion unit 60 and the fourth power conversion units 70, which perform the voltage increasing operation. By these operations, the noise current is precisely reduced in the third power conversion unit 60 and the fourth power conversion unit 70 in which the voltage increasing operation is performed. Therefore, the control device 24, by synchronizing the operation of the third power conversion unit 60 and the fourth power conversion units 70 in which the voltage increasing operation is performed, and synchronizing the operation of the first power conversion unit 30 and the second power conversion units 40 in which the voltage decreasing operation is performed in the temperature increasing operation, can precisely suppress the generation of noise current compared to the second embodiment.

< other embodiments>

Each of the above embodiments may be implemented with the following modifications.

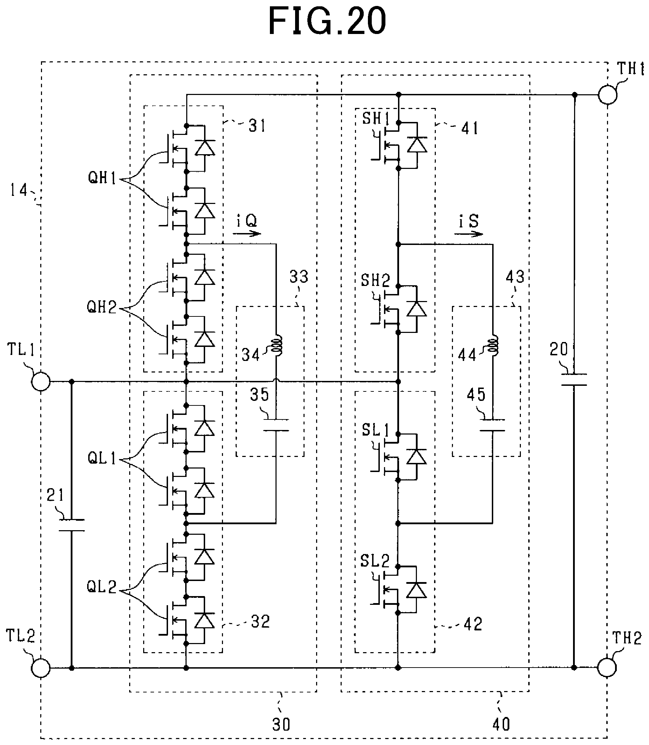

The upper and lower switches in each of the upper and lower arms 31, 32, 41, 42, 61, 62, 71, and 72 are not limited to single semiconductor switches, but may be composed of multiple semiconductor switches connected in series. Figure 20 shows an example in which, in the configuration shown in Figure 2, each of the witches QH1 and QH2 of the FIRST upper arm 31 and switches QL1 and QL2 of the first lower arm 32 are composed of two N-channel MOSFETs connected in series. This allows each of switches QH1 and QH2, QL1 and QL2 to be low withstand voltage elements.

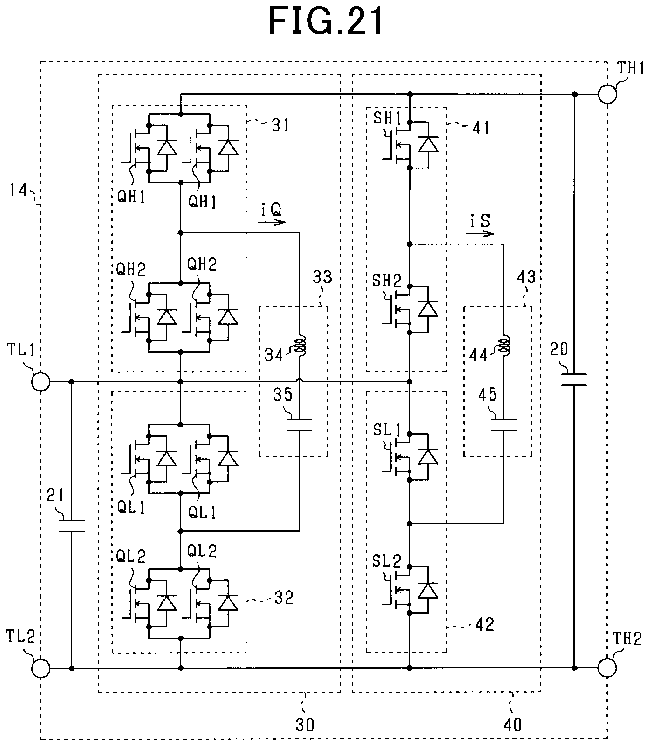

The upper and lower switches in each of the upper and lower arms 31, 32, 41, 42, 61, 62, 71, and 72 may be composed of multiple semiconductor switches connected in parallel. Figure 21 shows an example in which, in the configuration shown in Figure 2, each of the switches QH1 and QH2 of the FIRST upper arm 31 and switches QL1 and QL2 of the FIRST lower arm 32 are composed of two N-channel MOSFETs connected in parallel. This allows each of the switches QH1 and QH2, QL1 and QL2 to be elements of low current capacity.

The configuration of the first resonator may be modified. Specifically, regarding the first resonator 33 as an example, the first side of the first capacitor 35 may be connected to the connection point between the source of the upper switch QH1 and the drain of the lower switch QH2 in first upper arm 31. The second side of the first capacitor 35 may be connected to the first side of the first reactor 34. The second side of the first reactor 34 may be connected to the connection point between the source of the upper switch QL1 and the drain of the lower switch QL2 in the first lower arm 32. As in the case of the first resonator 33, each of the second, third, and fourth resonators 43, 63, and 73 may be configured differently.

In the fourth embodiment, the control device 24 is not limited to synchronize the operation of the two power conversion units in which the voltage increasing operation is performed and the two power conversion units in which the voltage decreasing operation is performed. For example, control device 24 may synchronize the voltage increasing operation of the third power conversion unit 60 with the voltage decreasing operation and of the first power conversion unit 30 and synchronize the voltage increasing operation of the fourth power conversion unit 70 with the voltage decreasing operation of the second power conversion unit 40.

The power conversion device 14 may have more than five power conversion units. For example, when the power conversion device 14 includes six power conversion units, the number of pairs in which the operations of two power conversion units can be synchronized is three. In this case, there are various possible combinations of operations to be performed by the three pairs. Here, to precisely suppress the generation of the noise current, it is desirable to synchronize the operations of the two voltage increasing operation units or the two voltage decreasing operation units in each pair.

Therefore, the control device 24 may synchronize the voltage increasing operations of each of the two voltage increasing operation units in any two of the three pairs and the voltage decreasing operations of each of the voltage decreasing operation units in remaining one pair. In this case, the control device 24, for balancing the power transferred in the temperature increasing operation, may shorten the period of the Mode 2 and the mode 4 in the voltage increasing operation compared to the period of the Mode 2 and the mode 4 in the voltage decreasing operation.

The control device 24 may synchronize the voltage decreasing operations of each of the two voltage increasing operation units in any two of the three pairs and the voltage decreasing operations of each of the voltage increasing operation units in remaining one pair. In this case, the control device 24, for balancing the power transferred in the temperature increasing operation, may lengthen the period of the Mode 2 and the mode 4 in the voltage increasing operation compared to the period of the Mode 2 and the mode 4 in the voltage decreasing operation.

According to these embodiments, in each pair in which the operation of the two power conversion units can be synchronized, the operation of the two voltage increasing operation units is synchronized, or the operation of the two voltage decreasing operation units is synchronized. Therefore, the generation of noise current can be precisely suppressed.

In the temperature increasing operation, the way of determining the operation of the two power conversion units in a pair that can be synchronized is not limited to synchronizing the operations of the two voltage increasing operation units and synchronizing the operations of the two voltage decreasing operation units.

The control device 24, in the temperature increasing operation, may synchronize the one voltage increasing unit which is not synchronized with other voltage increasing unit, with the one voltage decreasing unit which is not synchronized with other voltage decreasing unit. For example, in a case where the power conversion unit has six power conversion units, the control device 24, may synchronize the one voltage increasing unit which is not synchronized with other two voltage increasing unit, with the one voltage decreasing unit which is not synchronized with other two voltage decreasing unit.

In a case where the power conversion device 14 has eight power conversion units, the number of pairs in which the operations of the two power conversion units can be synchronized is four. In this case, the control device 24 synchronizes the voltage increasing operations of the two voltage increasing operation units in any two of the four pairs and synchronizes the voltage decreasing operations of the two voltage decreasing operation units in the remaining two pairs. By these operations, any one of the voltage increasing units is synchronized with the other voltage increasing units, and any one of the voltage decreasing units is synchronized with the other voltage decreasing units.

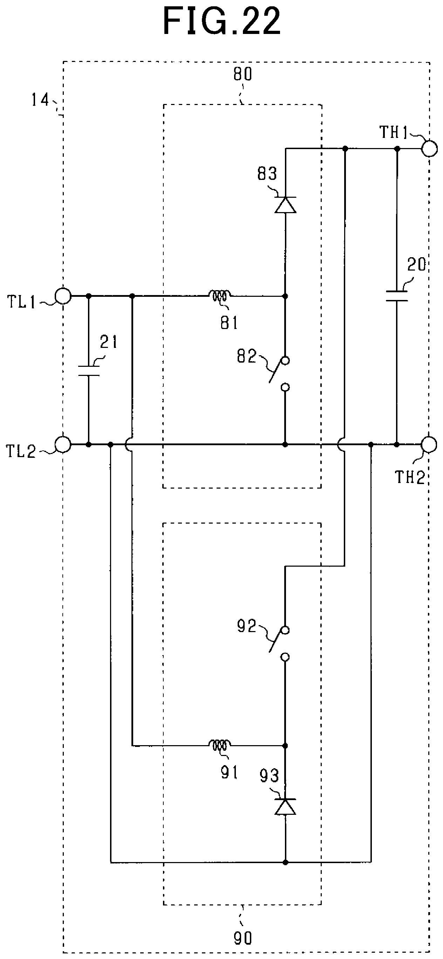

The power conversion unit is not limited to the one with an upper arm, a lower arm, and a resonator, such as the first to fourth power conversion units 30, 40, 60, and 70. For example, the power conversion unit may be a non-isolated DC/DC converter. Figure 22 shows an example in which the power conversion device 14 includes a fifth power conversion unit 80 instead of first power conversion unit 30 and a sixth power conversion unit 90 instead of first power conversion unit 40. The fifth power conversion unit 80 is a step-up chopper type non-isolated DC/DC converter including a fifth reactor 81, a step-up switch 82, and a step-up diode 83. The sixth power conversion unit 90 is a step-down chopper type non-isolated DC/DC converter including a sixth reactor 91, a step-down switch 92, and a step-down diode 93. In this case, the power conversion unit 80 performs only the voltage increasing operation, while the sixth power conversion unit 90 performs only the voltage decreasing operation. The conversion unit may be a step-up/step-down chopper type non-isolated DC/DC converter.

The low voltage terminals TL1 and TL2 may be connected to the battery instead of being connected to the external charger 16. The high voltage terminals TH1 and TH2 may be connected to the DC side of the ACDC converter instead of being connected to the battery 13.

Each of the upper and lower switches in the upper and lower arms 31, 32, 41, 42, 61, 62, 71, and 72 is not limited to N-channel MOSFETs, but can be, for example, IGBTs with freewheeling diodes connected in reverse parallel.

## Claims

1. A power conversion device (14) including low voltage terminals (TL1 and TL2) and high voltage terminals (TH1 and TH2), the power conversion device (14) comprising:

   a voltage increasing operation unit configured to increase the voltage input to the low voltage terminals (TL1 and TL2) and outputting the increased voltage to the high voltage terminals (TH1 and TH2); and
   a voltage decreasing operation unit configured to decrease the voltage input to the high voltage terminals (TH1 and TH2) and outputting the decreased voltage to the low voltage terminals (TL1 and TL2);
   a plurality of power conversion units (30, 40, 60, 70), each of the power conversion units (30, 40, 60, 70) including: a series connection of first upper arm switches (QH1, SH1, KH1, RH1) and second upper arm switches (QH2, SH2, KH2, RH2); a series connection of first lower arm switches (QL1, SL1, KL1, RL1) and second lower arm switches (QL2, SL2, KL2, RL2); and a resonator (33, 43, 63, 73) comprising a series connection of a reactor (34, 44, 64, 74) and a capacitor (35, 45, 65, 75),
   the high voltage terminals (TH1 and TH2) include a first high voltage terminal (TH1) with higher potential and a second high voltage terminal (TH2) with lower potential than the first high voltage terminal (TH1),
   the low voltage terminals (TL1 and TL2) include a first low voltage terminal (TL1) with higher potential and a second low voltage terminal (TL2) with lower potential than the first low voltage terminal (TL1),
   the resonator (33, 43, 63, 73) is configured to connect the connection points of the first upper arm switches (QH1, SH1, KH1, RH1) and second upper arm switches (QH2, SH2, KH2, RH2) to a connection point of the first lower arm switches (QL1, SL1, KL1, RL1) and second lower arm switches (QL2, SL2, KL2, RL2),
   the first upper arm switches (QH1, SH1, KH1, RH1) are connected to the first high voltage terminal (TH1),
   the connection point of the first lower arm switches (QL1, SL1, KL1, RL1) and second upper arm switches (QH2, SH2, KH2, RH2) is connected to the first low voltage terminal (TL1), the second lower arm switches (QL2, SL2, KL2, RL2) are connected to the second high voltage terminal (TH2) and the second low voltage terminal (TL2),

each of the plurality of power conversion units (30, 40, 60, 70) is configured to operate as at least one of the voltage increasing operation unit and the voltage decreasing operation unit by switching the first upper arm switches (QH1, SH1, KH1, RH1), the second upper arm switches (QH2, SH2, KH2, RH2), the first lower arm switches (QL1, SL1, KL1, RL1), and the second lower arm switches (QL2, SL2, KL2, RL2),

**characterized in that**:

the power conversion device further comprises a control unit (24) configured to perform a temperature increasing operation to increase a temperature of a battery (13), by causing the voltage increasing operation unit to perform a voltage increasing operation and the voltage decreasing operation unit to perform a voltage decreasing operation, and wherein

the control unit (24) is configured to perform the temperature increasing operation, by operating at least one of the plurality of power conversion units (30, 40, 60, 70) as the voltage increasing operation unit and at least another of the plurality of power conversion units (30, 40, 60, 70) as the voltage decreasing operation unit.

2. The power conversion device (14) according to claim 1, wherein
the control unit (24) is configured to, when performing the temperature increasing operation:

have a switching frequency of the first upper arm switches (QH1, SH1, KH1, RH1), the second upper arm switches (QH2, SH2, KH2, RH2), the first lower arm switches (QL1, SL1, KL1, RL1) and the second lower arm switches (QL2, SL2, KL2, RL2) of the voltage increasing operation unit higher than a resonance frequency of the resonator (33, 43, 63, 73) of the voltage increasing operation unit; and
have a switching frequency of the first upper arm switches (QH1, SH1, KH1, RH1), the second upper arm switches (QH2, SH2, KH2, RH2), the first lower arm switches (QL1, SL1, KL1, RL1) and the second lower arm switches (QL2, SL2, KL2, RL2) of the voltage decreasing operation unit higher than a resonance frequency of the resonator (33, 43, 63, 73) of the voltage decreasing operation unit.

3. The power conversion device (14) according to claim 1, wherein
the control unit (24) is configured to, when operating each of the plurality of power conversion units (30, 40, 60, 70) as only one of the voltage increasing operation unit and the voltage decreasing operation unit, have a switching frequency of the first upper arm switches (QH1, SH1, KH1, RH1), the second upper arm switches (QH2, SH2, KH2, RH2), the first lower arm switches (QL1, SL1, KL1, RL1) and the second lower arm switches (QL2, SL2, KL2, RL2) lower than the resonance frequency of the resonator (33, 43, 63, 73) and near the resonance frequency of the resonator (33, 43, 63, 73).

4. The power conversion device (14) according to claim 1, wherein

the power conversion device (14) further comprises an acquiring unit to acquire voltage of at least one of the low voltage terminals (TL1 and TL2) and the high voltage terminals (TH1 and TH2),
the control unit (24) is configured to, when performing the temperature increasing operation:

have the voltage increasing operation unit repeat processes, each of the processes consisting of a Mode **1,** a Mode 2, a Mode 3, and a Mode 4 in this order;
have the voltage decreasing operation unit repeat processes, each of the processes consisting of the Mode 1, the Mode 4, the Mode 3, and the Mode 2 in this order; and
set at least one length of a period of the Mode 1, the Mode 2, the Mode 3, and the Mode 4 based on the voltage acquired by the acquiring unit,
the Mode 1 is a state in which the second upper arm switches (QH2, SH2, KH2, RH2) and the second lower arm switches (QL2, SL2, KL2, RL2) are turned off and the first upper arm switches (QH1, SH1, KH1, RH1) and the first lower arm switches (QL1, SL1, KL1, RL1) are turned on,
the Mode 2 is a state in which the second upper arm switches (QH2, SH2, KH2, RH2) and the first lower arm switches (QL1, SL1, KL1, RL1) are turned off and the first upper arm switches (QH1, SH1, KH1, RH1) and the second lower arm switches (QL2, SL2, KL2, RL2) are turned on,
the Mode 3 is a state in which the first upper arm switches (QH1, SH1, KH1, RH1) and the first lower arm switches (QL1, SL1, KL1, RL1) are turned off and the second upper arm switches (QH2, SH2, KH2, RH2) and the second lower arm switches (QL2, SL2, KL2, RL2) are turned on, and
the Mode 4 is a state in which the first upper arm switches (QH1, SH1, KH1, RH1) and the second lower arm switches (QL2, SL2, KL2, RL2) are turned off and the second upper arm switches (QH2, SH2, KH2, RH2) and the first lower arm switches (QL1, SL1, KL1, RL1) are turned on.

5. The power conversion device (14) according to claim 1, wherein

when the temperature increasing operation is performed, more than two of the plurality of power conversion units (30, 40, 60, 70) perform as the voltage increasing operation unit, and more than two of the plurality of power conversion units (30, 40, 60, 70) perform as the voltage decreasing operation unit, the control unit (24) is configured to, when performing the temperature increasing operation, synchronize operations of the more than two of the plurality of power conversion units (30, 40, 60, 70) that perform as the voltage increasing operation unit, and synchronize operations of the more than two of the plurality of power conversion units (30, 40, 60, 70) that perform as the voltage decreasing operation unit.

6. The power conversion device (14) according to claim 5, wherein
the control unit (24) is configured to synchronize the one power conversion unit performing as the voltage increasing unit which is not synchronized with other power conversion unit performing as the voltage increasing operation unit, with the one power conversion unit performing as the voltage decreasing operation unit which is not synchronized with other power conversion unit performing as the voltage decreasing operation unit.

7. The power conversion device (14) according to claim 1, wherein
the control unit (24) is configured to, when performing the temperature increasing operation, synchronize the voltage increasing operation of the voltage increasing operation unit with the voltage decreasing operation of the voltage decreasing operation unit.

8. The power conversion device (14) according to any one of any one of claims 5-7, wherein
the control unit (24) is configured to, when performing the temperature increasing operation, stop the operation of each of the power conversion units (30, 40, 60, 70) except for the power conversion units that are operated in synchronization with other power conversion units.

9. The power conversion device (14) according to any one of claims 5-7, wherein
the control unit (24) is configured to, when performing the temperature increasing operation, have each of the power conversion units (30, 40, 60, 70) except for the power conversion units that are operated in synchronization with other power conversion units perform as the voltage increasing operation unit or the voltage decreasing operation unit.

**Patentansprüche**

1. Leistungsumwandlungsvorrichtung (14) mit Niederspannungsanschlüssen (TL1 und TL2) und Hochspannungsanschlüssen (TH1 und TH2), wobei die Leistungsumwandlungsvorrichtung (14) umfasst:

eine Spannungserhöhungs-Betriebseinheit, die dazu eingerichtet ist, die an die Niederspannungsanschlüsse (TL1 und TL2) eingegebene Spannung zu erhöhen und die erhöhte Spannung an die Hochspannungsanschlüsse (TH1 und TH2) auszugeben; und
eine Spannungssenkungs-Betriebseinheit, die dazu eingerichtet ist, die an die Hochspannungsanschlüsse (TH1 und TH2) eingegebene Spannung zu senken und die gesenkte Spannung an die Niederspannungsanschlüsse (TL1 und TL2) auszugeben;
eine Vielzahl von Leistungsumwandlungseinheiten (30, 40, 60, 70), wobei jede der Leistungsumwandlungseinheiten (30, 40, 60, 70) aufweist: eine Reihenschaltung aus ersten Schaltern (QH1, SH1, KH1, RH1) im oberen Zweig und zweiten Schaltern (QH2, SH2, KH2, RH2) im oberen Zweig; eine Reihenschaltung aus ersten Schaltern (QL1, SL1, KL1, RL1) im unteren Zweig und zweiten Schaltern (QL2, SL2, KL2, RL2) im unteren Zweig; und einen Resonator (33, 43, 63, 73), der eine Reihenschaltung aus einer Drossel (34, 44, 64, 74) und einem Kondensator (35, 45, 65, 75) umfasst,
die Hochspannungsanschlüsse (TH1 und TH2) einen ersten Hochspannungsanschluss (TH1) mit höherem Potential und einen zweiten Hochspannungsanschluss (TH2) mit niedrigerem Potential als der erste Hochspannungsanschluss (TH1) aufweisen,
die Niederspannungsanschlüsse (TL1 und TL2) einen ersten Niederspannungsanschluss (TL1) mit höherem Potential und einen zweiten Niederspannungsanschluss (TL2) mit niedrigerem Potential als der erste Niederspannungsanschluss (TL1) aufweisen,
der Resonator (33, 43, 63, 73) dazu eingerichtet ist, die Verbindungspunkte der ersten Schalter (QH1, SH1, KH1, RH1) im oberen Zweig und der zweiten Schalter (QH2, SH2, KH2, RH2) im oberen Zweig mit einem Verbindungspunkt der ersten Schalter (QL1, SL1, KL1, RL1) im unteren Zweig und der zweiten Schalter (QL2, SL2, KL2, RL2) im unteren Zweig zu verbinden, die ersten Schalter (QH1, SH1, KH1, RH1) im oberen Zweig mit dem ersten Hochspannungsanschluss (TH1) verbunden sind,

der Verbindungspunkt der ersten Schalter (QL1, SL1, KL1, RL1) im unteren Zweig und der zweiten Schalter (QH2, SH2, KH2, RH2) im oberen Zweig mit dem ersten Niederspannungsanschluss (TL1) verbunden ist,

die zweiten Schalter (QL2, SL2, KL2, RL2) im unteren Zweig mit dem zweiten Hochspannungsanschluss (TH2) und dem zweiten Niederspannungsanschluss (TL2) verbunden sind,

jede der Vielzahl von Leistungsumwandlungseinheiten (30, 40, 60, 70) dazu eingerichtet ist, durch Schalten der ersten Schalter (QH1, SH1, KH1, RH1) im oberen Zweig, der zweiten Schalter (QH2, SH2, KH2, RH2) im oberen Zweig, der ersten Schalter (QL1, SL1, KL1, RL1) im unteren Zweig und der zweiten Schalter (QL2, SL2, KL2, RL2) im unteren Zweig als mindestens eine von der Spannungserhöhungs-Betriebseinheit und der Spannungssenkungs-Betriebseinheit betrieben zu werden,

**dadurch gekennzeichnet, dass**:

die Leistungsumwandlungsvorrichtung ferner eine Steuereinheit (24) umfasst, die dazu eingerichtet ist, einen Temperaturerhöhungsvorgang durchzuführen, um eine Temperatur einer Batterie (13) zu erhöhen, indem sie die Spannungserhöhungs-Betriebseinheit veranlasst, einen Spannungserhöhungsvorgang durchzuführen, und die Spannungssenkungs-Betriebseinheit veranlasst, einen Spannungssenkungsvorgang durchzuführen, und wobei

die Steuereinheit (24) dazu eingerichtet ist, den Temperaturerhöhungsvorgang durchzuführen, indem sie mindestens eine aus der Vielzahl von Leistungsumwandlungseinheiten (30, 40, 60, 70) als die Spannungserhöhungs-Betriebseinheit und mindestens eine weitere aus der Vielzahl von Leistungsumwandlungseinheiten (30, 40, 60, 70) als die Spannungssenkungs-Betriebseinheit betreibt.

2. Leistungsumwandlungsvorrichtung (14) nach Anspruch 1, wobei die Steuereinheit (24) dazu eingerichtet ist, bei der Durchführung des Temperaturerhöhungsvorgangs:

eine Schaltfrequenz der ersten Schalter (QH1, SH1, KH1, RH1) im oberen Zweig, der zweiten Schalter (QH2, SH2, KH2, RH2) im oberen Zweig, der ersten Schalter (QL1, SL1, KL1, RL1) im unteren Zweig und der zweiten Schalter (QL2, SL2, KL2, RL2) im unteren Zweig der Spannungserhöhungs-Betriebseinheit aufzuweisen, die höher ist als eine Resonanzfrequenz des Resonators (33, 43, 63, 73) der Spannungserhöhungs-Betriebseinheit; und

eine Schaltfrequenz der ersten Schalter (QH1, SH1, KH1, RH1) im oberen Zweig, der zweiten Schalter (QH2, SH2, KH2, RH2) im oberen Zweig, der ersten Schalter (QL1, SL1, KL1, RL1) im unteren Zweig und der zweiten Schalter (QL2, SL2, KL2, RL2) im unteren Zweig der Spannungssenkungs-Betriebseinheit aufzuweisen, die höher ist als eine Resonanzfrequenz des Resonators (33, 43, 63, 73) der Spannungssenkungs-Betriebseinheit.

3. Leistungsumwandlungsvorrichtung (14) nach Anspruch 1, wobei
die Steuereinheit (24) dazu eingerichtet ist, bei Betrieb jeder der Vielzahl der Leistungsumwandlungseinheiten (30, 40, 60, 70) als nur eine von der Spannungserhöhungs-Betriebseinheit und der Spannungssenkungs-Betriebseinheit, eine Schaltfrequenz der ersten Schalter (QH1, SH1, KH1, RH1) im oberen Zweig, der zweiten Schalter (QH2, SH2, KH2, RH2) im oberen Zweig, der ersten Schalter (QL1, SL1, KL1, RL1) im unteren Zweig und der zweiten Schalter (QL2, SL2, KL2, RL2) im unteren Zweig aufzuweisen, die niedriger als die Resonanzfrequenz des Resonators (33, 43, 63, 73) und in der Nähe der Resonanzfrequenz des Resonators (33, 43, 63, 73) ist.

4. Leistungsumwandlungsvorrichtung (14) nach Anspruch 1, wobei

die Leistungsumwandlungsvorrichtung (14) ferner eine Erfassungseinheit zum Erfassen der Spannung von mindestens einem der Niederspannungsanschlüsse (TL1 und TL2) und der Hochspannungsanschlüsse (TH1 und TH2) umfasst,

die Steuereinheit (24) dazu eingerichtet ist, bei der Durchführung des Temperaturerhöhungsvorgangs:

die Spannungserhöhungs-Betriebseinheit zu veranlassen, Abläufe zu wiederholen, wobei jeder der Abläufe aus einem Modus 1, einem Modus 2, einem Modus 3 und einem Modus 4 in dieser Reihenfolge besteht;
die Spannungssenkungs-Betriebseinheit zu veranlassen, Abläufe zu wiederholen, wobei jeder der Abläufe aus dem Modus 1, dem Modus 2, dem Modus 3 und dem Modus 4 in dieser Reihenfolge besteht; und mindestens eine Länge einer Dauer von dem Modus 1, dem Modus 2, dem Modus 3 und dem Modus 4 auf der Grundlage der von der Erfassungseinheit erfassten Spannung festzulegen,

der Modus 1 ein Zustand ist, in dem die zweiten Schalter (QH2, SH2, KH2, RH2) im oberen Zweig und die zweiten Schalter (QL2, SL2, KL2, RL2) im unteren Zweig ausgeschaltet sind und die ersten Schalter (QH1, SH1, KH1, RH1) im oberen Zweig und die ersten Schalter (QL1, SL1, KL1, RL1) im unteren Zweig eingeschaltet sind,

der Modus 2 ein Zustand ist, in dem die zweiten Schalter (QH2, SH2, KH2, RH2) im oberen Zweig und die ersten Schalter (QL1, SL1, KL1, RL1) im unteren Zweig ausgeschaltet sind und die ersten Schalter (QH1, SH1, KH1, RH1) im oberen Zweig und die zweiten Schalter (QL2, SL2, KL2, RL2) im unteren Zweig eingeschaltet sind,

der Modus 3 ein Zustand ist, in dem die ersten Schalter (QH1, SH1, KH1, RH1) im oberen Zweig und die ersten Schalter (QL1, SL1, KL1, RL1) im unteren Zweig ausgeschaltet sind und die zweiten Schalter (QH2, SH2, KH2, RH2) im oberen Zweig und die zweiten Schalter (QL2, SL2, KL2, RL2) im unteren Zweig eingeschaltet sind, und

der Modus 4 ein Zustand ist, in dem die ersten Schalter (QH1, SH1, KH1, RH1) im oberen Zweig und die zweiten Schalter (QL2, SL2, KL2, RL2) im unteren Zweig ausgeschaltet sind und die zweiten Schalter (QH2, SH2, KH2, RH2) im oberen Zweig und die ersten Schalter (QL1, SL1, KL1, RL1) im unteren Zweig eingeschaltet sind.

5. Leistungsumwandlungsvorrichtung (14) nach Anspruch 1, wobei

wenn der Temperaturerhöhungsvorgang durchgeführt wird, arbeiten mehr als zwei der Vielzahl von Leistungsumwandlungseinheiten (30, 40, 60, 70) als die Spannungserhöhungs-Betriebseinheit und mehr als zwei der Vielzahl von Leistungsumwandlungseinheiten (30, 40, 60, 70) als die Spannungssenkungs-Betriebseinheit,

die Steuereinheit (24) dazu eingerichtet ist, bei der Durchführung des Temperaturerhöhungsvorgangs den Betrieb von den mehr als zwei aus der Vielzahl von Leistungsumwandlungseinheiten (30, 40, 60, 70), die als die Spannungserhöhungs-Betriebseinheit arbeiten, zu synchronisieren und den Betrieb von den mehr als zwei aus der Vielzahl von Leistungsumwandlungseinheiten (30, 40, 60, 70), die als die Spannungssenkungs-Betriebseinheit arbeiten, zu synchronisieren.

6. Leistungsumwandlungsvorrichtung (14) nach Anspruch 5, wobei
die Steuereinheit (24) dazu eingerichtet ist, die eine Leistungsumwandlungseinheit, die als die Spannungserhöhungs-Betriebseinheit arbeitet, die nicht mit einer anderen Leistungsumwandlungseinheit, die als Spannungserhöhungs-Betriebseinheit arbeitet, synchronisiert ist, mit der einen Leistungsumwandlungseinheit zu synchronisieren, die als Spannungssenkungs-Betriebseinheit arbeitet, die nicht mit einer anderen Leistungsumwandlungseinheit, die als Spannungssenkungs-Betriebseinheit arbeitet, synchronisiert ist.

7. Leistungsumwandlungsvorrichtung (14) nach Anspruch 1, wobei
die Steuereinheit (24) dazu eingerichtet ist, bei der Durchführung des Temperaturerhöhungsvorgangs den Spannungserhöhungsvorgang der Spannungserhöhungs-Betriebseinheit mit dem Spannungssenkungsvorgang der Spannungssenkungs-Betriebseinheit zu synchronisieren.

8. Leistungsumwandlungsvorrichtung (14) nach einem der Ansprüche 5 bis 7, wobei
die Steuereinheit (24) dazu eingerichtet ist, bei der Durchführung des Temperaturerhöhungsvorgangs den Betrieb jeder der Leistungsumwandlungseinheiten (30, 40, 60, 70) zu anzuhalten, mit Ausnahme derjenigen Leistungsumwandlungseinheiten, die synchron mit anderen Leistungsumwandlungseinheiten betrieben werden.

9. Leistungsumwandlungsvorrichtung (14) nach einem der Ansprüche 5 bis 7, wobei
die Steuereinheit (24) dazu eingerichtet ist, bei der Durchführung des Temperaturerhöhungsvorgangs, jede der Leistungsumwandlungseinheiten (30, 40, 60, 70), mit Ausnahme derjenigen Leistungsumwandlungseinheiten, die synchron mit anderen Leistungsumwandlungseinheiten betrieben werden, als die Spannungserhöhungs-Betriebseinheit oder die Spannungssenkungs-Betriebseinheit zu betreiben.

**Revendications**

1. Dispositif de conversion de puissance (14) comprenant des bornes basse tension (TL1 et TL2) et des bornes haute tension (TH1 et TH2), le dispositif de conversion de puissance (14) comprenant :

une unité de fonctionnement d'augmentation de tension configurée pour augmenter la tension entrée dans les bornes basse tension (TL1 et TL2) et fournir la tension augmentée aux bornes haute tension (TH1 et TH2) ; et

une unité de fonctionnement de diminution de tension configurée pour diminuer la tension entrée dans les bornes haute tension (TH1 et TH2) et fournir la tension diminuée aux bornes basse tension (TL1 et TL2) ;

une pluralité d'unités de conversion de puissance (30, 40, 60, 70), chacune des unités de conversion de puissance (30, 40, 60, 70) comprenant : une connexion en série de premiers interrupteurs de bras supérieur (QH1, SH1, KH1, RH1) et de seconds interrupteurs de bras supérieur (QH2, SH2, KH2, RH2) ; une connexion en série de premiers interrupteurs de bras inférieur (QL1, SL1, KL1, RL1) et de seconds interrupteurs de bras inférieur (QL2, SL2, KL2, RL2) ; et un résonateur (33, 43, 63, 73) comprenant une connexion en série d'un réacteur (34, 44, 64, 74) et d'un condensateur (35, 45, 65, 75),

les bornes haute tension (TH1 et TH2) comprennent une première borne haute tension (TH1) avec un potentiel plus élevé et une seconde borne haute tension (TH2) avec un potentiel plus bas que la première borne haute tension (TH1),

les bornes basse tension (TL1 et TL2) comprennent une première borne basse tension (TL1) avec un potentiel plus élevé et une seconde borne basse tension (TL2) avec un potentiel plus bas que la première borne basse tension (TL1),

le résonateur (33, 43, 63, 73) est configuré pour connecter les points de connexion des premiers interrupteurs de bras supérieur (QH1, SH1, KH1, RH1) et des seconds interrupteurs de bras supérieur (QH2, SH2, KH2, RH2) à un point de connexion des premiers interrupteurs de bras inférieur (QL1, SL1, KL1, RL1) et des seconds interrupteurs de bras inférieur (QL2, SL2, KL2, RL2),

les premiers interrupteurs de bras supérieur (QH1, SH1, KH1, RH1) sont connectés à la première borne haute tension (TH1),

le point de connexion des premiers interrupteurs de bras inférieur (QL1, SL1, KL1, RL1) et des seconds interrupteurs de bras supérieur (QH2, SH2, KH2, RH2) est connecté à la première borne basse tension (TL1),

les seconds interrupteurs de bras inférieur (QL2, SL2, KL2, RL2) sont connectés à la seconde borne haute tension (TH2) et à la seconde borne basse tension (TL2),

chacune de la pluralité d'unités de conversion de puissance (30, 40, 60, 70) est configurée pour fonctionner comme au moins une de l'unité de fonctionnement d'augmentation de tension et de l'unité de fonctionnement de diminution de tension en commutant les premiers interrupteurs de bras supérieur (QH1, SH1, KH1, RH1), les seconds interrupteurs de bras supérieur (QH2, SH2, KH2, RH2), les premiers interrupteurs de bras inférieur (QL1, SL1, KL1, RL1), et les seconds interrupteurs de bras inférieur (QL2, SL2, KL2, RL2),

**caractérisé en ce que** :

le dispositif de conversion de puissance comprend en outre une unité de commande (24) configurée pour effectuer un fonctionnement d'augmentation de température afin d'augmenter la température d'une batterie (13), en amenant l'unité de fonctionnement d'augmentation de tension à effectuer un fonctionnement d'augmentation de tension et l'unité de fonctionnement de diminution de tension à effectuer un fonctionnement de diminution de tension, et dans lequel

l'unité de commande (24) est configurée pour effectuer le fonctionnement d'augmentation de température en faisant fonctionner au moins une de la pluralité d'unités de conversion de puissance (30, 40, 60, 70) comme unité de fonctionnement d'augmentation de tension et au moins une autre de la pluralité d'unités de conversion de puissance (30, 40, 60, 70) comme unité de fonctionnement de diminution de tension.

2. Dispositif de conversion de puissance (14) selon la revendication 1, dans lequel
l'unité de commande (24) est configurée pour, lors de l'exécution du fonctionnement d'augmentation de température :

avoir une fréquence de commutation des premiers interrupteurs de bras supérieur (QH1, SH1, KH1, RH1), des seconds interrupteurs de bras supérieur (QH2, SH2, KH2, RH2), des premiers interrupteurs de bras inférieur (QL1, SL1, KL1, RL1) et des seconds interrupteurs de bras inférieur (QL2, SL2, KL2, RL2) de l'unité de fonctionnement d'augmentation de tension qui est supérieure à une fréquence de résonance du résonateur (33, 43, 63, 73) de l'unité de fonctionnement d'augmentation de tension ; et
avoir une fréquence de commutation des premiers interrupteurs de bras supérieur (QH1, SH1, KH1, RH1), des seconds interrupteurs de bras supérieur (QH2, SH2, KH2, RH2), des premiers interrupteurs de bras inférieur (QL1, SL1, KL1, RL1) et des seconds interrupteurs de bras inférieur (QL2, SL2, KL2, RL2) de l'unité de fonctionnement de diminution de tension qui est supérieure à une fréquence de résonance du résonateur (33, 43, 63, 73) de l'unité de fonctionnement de diminution de tension.

3. Dispositif de conversion de puissance (14) selon la revendication 1, dans lequel

l'unité de commande (24) est configurée pour, lors du fonctionnement de chacune de la pluralité d'unités de conversion de puissance (30, 40, 60, 70) uniquement comme une unité de fonctionnement d'augmentation de tension ou comme une unité de fonctionnement de diminution de tension, avoir une fréquence de commutation des premiers interrupteurs de bras supérieur (QH1, SH1, KH1, RH1), des seconds interrupteurs de bras supérieur (QH2, SH2, KH2, RH2), des premiers interrupteurs de bras inférieur (QL1, SL1, KL1, RL1) et des seconds interrupteurs de bras inférieur (QL2, SL2, KL2, RL2) qui est inférieure à la fréquence de résonance du résonateur (33, 43, 63, 73) et proche de la fréquence de résonance du résonateur (33, 43, 63, 73).

4. Dispositif de conversion de puissance (14) selon la revendication 1, dans lequel

le dispositif de conversion de puissance (14) comprend en outre une unité d'acquisition pour acquérir la tension d'au moins une des bornes basse tension (TL1 et TL2) et des bornes haute tension (TH1 et TH2),
l'unité de commande (24) est configurée pour, lors de l'exécution du fonctionnement d'augmentation de température :

faire en sorte que l'unité de fonctionnement d'augmentation de tension répète des processus, chacun des processus consistant en un Mode 1, un Mode 2, un Mode 3 et un Mode 4 dans cet ordre ;
faire en sorte que l'unité de fonctionnement de diminution de tension répète des processus, chacun des processus consistant en le Mode 1, le Mode 4, le Mode 3 et le Mode 2 dans cet ordre ; et
définir au moins une durée d'une période du Mode 1, du Mode 2, du Mode 3 et du Mode 4 sur la base de la tension acquise par l'unité d'acquisition,
le Mode 1 est un état dans lequel les seconds interrupteurs de bras supérieur (QH2, SH2, KH2, RH2) et les seconds interrupteurs de bras inférieur (QL2, SL2, KL2, RL2) sont éteints et les premiers interrupteurs de bras supérieur (QH1, SH1, KH1, RH1) et les premiers interrupteurs de bras inférieur (QL1, SL1, KL1, RL1) sont allumés,
le Mode 2 est un état dans lequel les seconds interrupteurs de bras supérieur (QH2, SH2, KH2, RH2) et les premiers interrupteurs de bras inférieur (QL1, SL1, KL1, RL1) sont éteints et les premiers interrupteurs de bras supérieur (QH1, SH1, KH1, RH1) et les seconds interrupteurs de bras inférieur (QL2, SL2, KL2, RL2) sont allumés,
le Mode 3 est un état dans lequel les premiers interrupteurs de bras supérieur (QH1, SH1, KH1, RH1) et les premiers interrupteurs de bras inférieur (QL1, SL1, KL1, RL1) sont éteints et les seconds interrupteurs de bras supérieur (QH2, SH2, KH2, RH2) et les seconds interrupteurs de bras inférieur (QL2, SL2, KL2, RL2) sont allumés, et
le Mode 4 est un état dans lequel les premiers interrupteurs de bras supérieur (QH1, SH1, KH1, RH1) et les seconds interrupteurs de bras inférieur (QL2, SL2, KL2, RL2) sont éteints et les seconds interrupteurs de bras supérieur (QH2, SH2, KH2, RH2) et les premiers interrupteurs de bras inférieur (QL1, SL1, KL1, RL1) sont allumés.

5. Dispositif de conversion de puissance (14) selon la revendication 1, dans lequel

lorsque le fonctionnement d'augmentation de température est effectuée, plus de deux de la pluralité d'unités de conversion de puissance (30, 40, 60, 70) fonctionnent comme unité de fonctionnement d'augmentation de tension, et plus de deux de la pluralité d'unités de conversion de puissance (30, 40, 60, 70) fonctionnent comme unité de fonctionnement de diminution de tension,
l'unité de commande (24) est configurée pour, lors de l'exécution de l'opération d'augmentation de température, synchroniser des fonctionnements desdits plus de deux de la pluralité d'unités de conversion de puissance (30, 40, 60, 70) qui fonctionnent comme unité de fonctionnement d'augmentation de tension, et synchroniser des fonctionnements desdits plus de deux de la pluralité d'unités de conversion de puissance (30, 40, 60, 70) qui fonctionnent comme unité de fonctionnement de diminution de tension.

6. Dispositif de conversion de puissance (14) selon la revendication 5, dans lequel

l'unité de commande (24) est configurée pour synchroniser ladite unité de conversion de puissance qui fonctionne comme unité d'augmentation de tension et qui n'est pas synchronisée avec une autre unité de conversion de puissance qui fonctionne comme unité de fonctionnement d'augmentation de tension, avec ladite unité de conversion de puissance qui fonctionne comme unité de fonctionnement de diminution de tension et qui n'est pas synchronisée avec une autre unité de conversion de puissance qui fonctionne comme unité de fonctionnement de diminution de tension.

7. Dispositif de conversion de puissance (14) selon la revendication 1, dans lequel
l'unité de commande (24) est configurée pour, lors de l'exécution du fonctionnement d'augmentation de température, synchroniser le fonctionnement d'augmentation de tension de l'unité de fonctionnement d'augmentation de tension avec le fonctionnement de diminution de tension de l'unité de fonctionnement de diminution de tension.

8. Dispositif de conversion de puissance (14) selon l'une des revendications 5 à 7, dans lequel
l'unité de commande (24) est configurée pour, lors de l'exécution du fonctionnement d'augmentation de température, arrêter le fonctionnement de chacune des unités de conversion de puissance (30, 40, 60, 70), à l'exception des unités de conversion de puissance qui fonctionnent en synchronisation avec d'autres unités de conversion de puissance.

9. Dispositif de conversion de puissance (14) selon l'une des revendications 5 à 7, dans lequel
l'unité de commande (24) est configurée pour, lors de l'exécution du fonctionnement d'augmentation de température, faire en sorte que chacune des unités de conversion de puissance (30, 40, 60, 70), à l'exception des unités de conversion de puissance qui fonctionnent en synchronisation avec d'autres unités de conversion de puissance, fonctionne comme unité de fonctionnement d'augmentation de tension ou comme unité de fonctionnement de diminution de tension.

# FIG.1

BATTERY — 13

INV — 12

MG — 11

10

POWER CONVERSION DEVICE — 14

HEAT CONVEYING UNIT — 15

EXTERNAL CHARGER — 16

# FIG.2

EP 4 539 321 B1

# FIG.3

(a)
ON
QH2        QH1
OFF

(b)
ON
QL2        QL1
OFF

(c)
$t$
$\sim iQ$
0

Tsw (1 CYCLE)

Mode3        Mode1

Mode2        Mode4        Mode2

$\longrightarrow$ Time

# FIG.4

(a) Mode1

(b) Mode2

(c) Mode3

(d) Mode4

# FIG.5

# FIG.6

(a) Mode1

(b) Mode2

(c) Mode3

(d) Mode4

# FIG.7

# FIG.8

$$f_{sw} \left( = \frac{1}{T_{sw}} \right)$$

# FIG.9

| VL | VOLTAGE INCREASING OPERATION | | VOLTAGE DECREASING OPERATION | |
|---|---|---|---|---|
| $\geqq Va$ | Mode 2 Mode 4 | LENGTHEN | Mode 2 Mode 4 | SHORTEN |
| $\leqq Vb$ | Mode 2 Mode 4 | SHORTEN | Mode 2 Mode 4 | LENGTHEN |

| VH | VOLTAGE INCREASING OPERATION | | VOLTAGE DECREASING OPERATION | |
|---|---|---|---|---|
| $\geqq Vc$ | Mode 2 Mode 4 | SHORTEN | Mode 2 Mode 4 | LENGTHEN |
| $\leqq Vd$ | Mode 2 Mode 4 | LENGTHEN | Mode 2 Mode 4 | SHORTEN |

# FIG.10

# FIG.11

36

# FIG.12

# FIG.13

(a) t1

(b) t2

(c) t3

(d) t4

# FIG.14

# FIG.15

FIG.16

# FIG.17

EP 4 539 321 B1

# FIG.18

# FIG.19

(a) t5

(b) t6

(c) t7

(d) t8

# FIG.20

# FIG.21

# FIG.22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018042341 A
- EP 3537585 B1

- US 10651731 B1

**Non-patent literature cited in the description**

- Comprehensive Design and Optimization of an Onboard Resonant Self-Heater for EV Battery. **ZHU CHONG et al.** IEEE TRANSACTIONS ON TRANSPORTATION ELECTRIFICATION. IEEE, 21 September 2020, vol. 7, 452-463

- A Sine-Wave Heating Circuit for Automotive Battery Self-Heating at Subzero Temperatures. **SHANG YUNLONG et al.** IEEE TRANSACTIONS ON IN-DUSTRIAL INFORMATICS. IEEE SERVICE CEN-TER, 17 June 2019, vol. 16, 3355-3365